# EUROPÄISCHE PATENTANMELDUNG

(11) **EP 3 184 576 A1**
(43) Veröffentlichungstag der Anmeldung: **28.06.2017**
(21) Anmeldenummer: 17154775.5
(22) Anmeldetag: 16.07.2010
(51) Int. Cl.: C08G 65/26, C08G 77/46, C08G 18/12, C08G 18/20, C08G 18/22, C08G 18/48, C08G 18/50, C08G 18/71, C08G 18/75, C08G 18/79, C08G 18/08, C08G 18/10, C08G 18/28, C09D 175/08, C09D 183/12

(54) **HÄRTBARE MASSE ENTHALTEND URETHANGRUPPEN AUFWEISENDE SILYLIERTE POLYMERE UND DEREN VERWENDUNG IN DICHT- UND KLEBSTOFFEN, BINDE- UND/ODER OBERFLÄCHENMODIFIZIERUNGSMITTELN**

(30) Priorität: 19.08.2009 DE 102009028640
(62) Teilanmeldung aus: 10169796.9
(71) Anmelder: Evonik Degussa GmbH, 45128 Essen (DE)
(72) Erfinder: Schubert, Frank, 47506 Neukirchen-Vluyn (DE); Knott, Wilfried, 45355 Essen (DE); Ferenz, Michael, 45147 Essen (DE); Silber, Stefan, 47804 Krefeld (DE)

(57) **Zusammenfassung**

Härtbare Masse enthaltend Urethangruppen aufweisende silylierte Polymere und deren Verwendung in Dicht- und Klebstoffen, Binde- und/oder Oberflächenmodifizierungsmitteln.

## Beschreibung

Die Erfindung betrifft die Verwendung neuartiger härtbarer Massen enthaltend Urethangruppen aufweisende Reaktionsprodukte erhältlich aus Silylpolyethern und Isocyanat-Gruppen tragenden Verbindungen zur Oberflächenmodifizierung und - beschichtung, zur Herstellung von Dichtstoffen, Klebern, Bindemitteln und für Polyurethansysteme sowie Verfahren zu deren Herstellung.

Dem Fachmann sind zahlreiche auf den jeweiligen Anwendungsbereich zugeschnittene Typen von härtbaren Massen oder reaktiven Präpolymeren bekannt. In allen Fällen handelt es sich um Verbindungen, die reaktive, härtbare bzw. vernetzbare funktionelle Gruppen enthalten, wie z.B. Epoxid-, Amino-, Hydroxyl-, Isocyanat-, Acrylat-, Vinyl-, Allyl- oder Silylgruppen. Unter diesen sehr unterschiedlichen Typen von Präpolymeren besitzen die feuchtigkeitshärtenden Silylgruppen- und/oder Isocyanatgruppen tragenden Systeme eine herausragende wirtschaftliche Bedeutung.

Zu den wichtigsten Anwendungen reaktiver härtbarer Massen gehört die Verwendung als Kleb- und Dichtstoffe, als Bindemittel oder als Modifizierungsmittel für Oberflächen.

Eine Modifizierung im Rahmen dieser Erfindung schließt auch Oberflächenbeschichtungen mit ein, welche in der Regel vollflächig sind, wie z.B. bei Lacken und Farben und/oder in Hydrophobierungsmitteln.

Ebenso vielfältig sind die der Oberflächenmodifizierung zugänglichen Substrate. Neben eher flächigen Trägermaterialien wie Metallen, Beton, Kunststoffen, Holz oder Glas sind es feste Partikel, Fasern und beispielsweise textile Gewebe, die durch Applizieren dünner Schichten oberflächenmodifiziert werden.

So ist es Stand der Technik, Oberflächen anorganischer Partikel, makroskopischer anorganischer Oberflächen und anorganischer Fasern, wie z.B. solche der Metalloxide, Mischoxide, Nitride, Hydroxide, Carbide, Carbonate, Silikate, Pigmente, Ruße, Elemente oder Legierungen zu modifizieren. Ebenso dem Fachmann bekannt ist es, organische Partikel, Naturstoffe in kleinteiliger Form, makroskopische organische Oberflächen und Fasern, wie z. B. solche aus Siliconharzen, organomodifizierten Siliconen, organischen Polymeren oder Biopolymeren zu modifizieren.

Besonders vorteilhaft kann es sein, wenn die härtbare Masse mindestens eine funktionelle Gruppe aufweist, die mit der zu modifizierenden Oberfläche kovalente, ionische oder koordinative Bindungen oder Wasserstoffbrückenbindungen eingehen kann. Es kann sich bei diesen funktionellen Gruppen beispielsweise um Carbonsäuregruppen, OH-Gruppen, SH-Gruppen, Epoxidgruppen, Aminogruppen, SiOH-Gruppen, Isocyanatgruppen oder hydrolysierbare Alkoxysilane handeln.

Von besonderem Vorteil ist es, wenn gleichzeitig auf der Oberfläche des Substrats funktionelle Gruppen wie Hydroxylgruppen, SH-Gruppen, Aminogruppen oder beispielsweise Carbonsäuregruppen vorhanden sind, so dass sich intensive physikalische Wechselwirkungen ausbilden können oder es zu chemischen Reaktionen zwischen reaktiven funktionellen Gruppen der härtbaren Masse mit denen auf der Substratoberfläche kommt. Auf diesem Wege wird die härtbare Masse dauerhaft auf dem jeweiligen Untergrund verankert.

Die Art der Ankergruppe in der härtbaren Masse ist dabei in jedem Fall exakt auf die Beschaffenheit und den Typ der reaktiven funktionellen Gruppen der Substratoberfläche abzustimmen. Wichtige weitere Auswahlkriterien für die Selektion der am besten geeigneten härtbaren Masse sind der pH-Wert, Feuchtigkeitsgehalt oder die Porosität des jeweiligen Untergrunds.

Daher gibt es kein universell für alle Typen von Oberflächen einsetzbares chemisches System, sondern eine Vielzahl von reaktive Gruppen tragenden Verbindungsklassen, die zur Oberflächenmodifikation herangezogen werden. Der Stand der Technik listet zum Beispiel reaktive monomere und polymere Isocyanat-, Epoxid-, Acrylat-, Silan-, Carboxylat-, Amin-, Hydroxyl- und Mercapto-Funktionen aufweisende Verbindungen, die je nach Substrat auf unterschiedlichem chemischen/physikalischen Wege auf dem Untergrund fixiert werden.

Reaktive härtbare Massen spielen als Dicht- und Klebstoffe, Bindemittel und/oder Lackbestandteile eine bedeutende Rolle, darunter insbesondere solche, die feuchtigkeitsvernetzende Isocyanat- und/oder Alkoxysilanfunktionen aufweisen.

Polymere und Oligomere, die aus Isocyanatgruppen tragenden Verbindungen durch Umsetzung mit hydroxyl- oder aminofunktionellen Verbindungen hergestellt werden, sind in großer chemischer Vielfalt bekannt. Je nach Stöchiometrie der Umsetzung und Art der Ausgangsverbindungen entstehen so Urethan- bzw. Harnstoffgruppen aufweisende Präpolymere, die endständig reaktive Isocyanat-, Hydroxyl- oder Amingruppen tragen und in der Synthese entweder in einem Folgeschritt weiter umgesetzt werden können oder aber häufig als vernetzbare Grundstoffe für Kleb- und Dichtstoffe oder auch als Beschichtungsmittel eingesetzt werden können.

Besonders verbreitet und von wirtschaftlicher Bedeutung sind Isocyanat-terminierte Urethanpräpolymere bekannt, die durch die Umsetzung eines Polyetherpolyols mit molaren Überschüssen eines organischen Diisocyanatmonomers gebildet werden und bei denen man gegebenenfalls den Überschuss des Diisocyanatmonomers destillativ entfernt. Beispielsweise stellen die Schriften GB 1,101,410 und US 5,703,193, US 4,061,662, US 4,182,825, US 4,385,171, US 4,888,442 und US 4,2788,577 auf solche Präpolymere ab.

Das Einbringen von Urethangruppen in die Präpolymerstruktur gestattet es, die von den Polyurethanen bekannte gute Beständigkeit gegenüber Lösemitteln, Chemikalien und Witterungseinflüssen sowie ihre hohe mechanische Flexibilität auf die Isocyanat-basierenden Dicht- und Klebstoffe zu übertragen. Neben den NCO-Gruppen tragenden Polyurethanpräpolymeren sind auch silanterminierte Polyurethane bekannt, die nach dem Stand der Technik keine freien NCO-Gruppen mehr enthalten. Durch Umsetzung eines Isocyanatpräpolymers mit z.B. Aminogruppen tragenden Alkoxysilanen entstehen Harnstoffgruppen als Bindeglied zwischen dem Präpolymer und den eigentlich angestrebten härtbaren terminalen Alkoxysilylgruppen.

Alkoxysilanfunktionelle Polyurethane können gemäß US 3,627,722 oder US 3,632,557 hergestellt werden, indem z.B. Polyetherpolyole mit einem Überschuss Polyisocyanat zu einem NCO-haltigen Präpolymer umgesetzt werden, das dann wiederum mit einem aminofunktionellen Alkoxysilan weiter umgesetzt wird.

DE 10 2005 041954 A1 beschreibt Alkoxysilylgruppen aufweisende Urethanpräpolymere, die allophanat-modifiziert sind und deren Allophanatstruktur einen feuchtigkeitshärtenden silanfunktionellen Rest aufweist.

Die Lehre der DE 10 2006 054 155 sieht vor, den bereits in der Copolymerstruktur vertretenen Trialkoxysilyleinheiten freie Silane als zusätzliche Komponenten hinzuzufügen, die die Funktion als Wasserfänger (Verbesserung der Lagerstabilität), als Vernetzer, Reaktivverdünner oder z.B. Haftvermittler übernehmen.

Dow Chemical beschreibt in der US 6,162,862 polyfunktionelle flüssige urethanhaltige Addukte, die neben einer Isocyanatfunktion auch eine Silylfunktion enthalten können, als Oberflächenbeschichtungsmittel und Bestandteil in Farben.

Nachteilig im Sinne einer guten Substrathaftung der Klebeverbindung, des Dichtstoffes oder z.B. des Oberflächenbeschichtungsmittels ist die geringe Funktionalisierungsdichte der nur in α,ω-Position mit Silylgruppen terminierten Präpolymere des Stands der Technik. Auch die bekannten Isocyanat-Präpolymere weisen nur an ihren Kettenenden vernetzbare NCO-Gruppen auf.

Die Verwendung von alkoxysilanfunktionellen Präpolymeren zur Herstellung von silanvernetzenden Hart- und Weichschäumen, insbesondere von isocyanat-freien sprühbaren Montageschäumen, ist bekannt und z.B. in EP 1 098 920 B1 oder EP 1 363 960 B1 beschrieben. Diese Sprühschäume werden typischerweise aus Druckdosen appliziert und dienen allgemein zum Verfüllen und Abdichten von Hohlräumen im Bauwerk.

Die DE 10 2006 054 155 lehrt ein Verfahren zum Verkleben von Oberflächen mit einer schäumbaren Mischung aus silanterminierten Präpolymeren und Treibmittel.

Alkoxysilan-terminierte, feuchtigkeitshärtende Einkomponenten-Polyurethane werden in zunehmendem Maße als weichelastische Beschichtungs-, Dichtungs- und Klebemassen im Bauwesen und in der Automobilindustrie verwendet.

Oberflächenmodifizierungsmittel oder härtbare Massen, Dicht- und Klebstoffe aus Silangruppen tragenden Verbindungen können pur, gelöst in einem organischen Lösemittel, in Formulierungen aber auch als wässerige Emulsion appliziert werden. Emulsionen von silylierten Präpolymeren sind Gegenstand einer Vielzahl von Schriften. Die DE 2558653 beschreibt Emulsionen aus selbstemulgierenden, Silylgruppen tragenden Polyurethanen und deren Anwendung für die Beschichtung von Oberflächen. Die JP 1318066 beschreibt wässerige Emulsionen aus silylierten Polyethern, die zusätzlich kolloidale Kieselsäure enthalten können. DE 4215648 offenbart lagerstabile Kontaktklebstoffe auf Basis von Lösungen, beziehungsweise Emulsionen von kationisch modifizierten, alkoxysilanterminierten Polyurethanen. Verbreitet ist der Einsatz niedrig viskoser, monomerer Alkoxysilanverbindungen der Formel (1),

UₓSiV₍₄₋ₓ₎ Formel (1)

wobei U gleiche oder verschiedene, in Anwesenheit von Wasser und ggfs. Katalysator nicht hydrolysierbare Gruppen und V = gleiche oder verschiedene in Anwesenheit von Wasser und ggfs. Katalysator hydrolysierbare Gruppen oder Hydroxygruppen und x = 1, 2, 3 oder 4 darstellen. Hierzu gehören z.B. die Trimethoxysilyl- und Triethoxysilylgruppen tragenden Verbindungen.

Sogenannte α-Silan-terminierte Polymere, deren reaktive Alkoxysilylgruppen nur durch eine Methyleneinheit von einer Urethangruppe getrennt ist, beschreiben WO 2005/100482 und EP-A1-1 967 550.

Darüber hinaus sind Silanpolymere bekannt, in denen die Silangruppen terminal durch eine Propyleneinheit von einer Urethangruppe getrennt, an ein Polymergerüst gebunden ist. Bevorzugt sind dabei Polyalkylenoxide, speziell Polypropylenglykole mit Silanfunktionen an jedem der beiden Kettenenden, wie in EP-A1-1 824 904 beschrieben.

Ebenso bekannt sind Silan-terminierte Polyurethane, deren Herstellung aus einem Polyol durch Umsetzung mit einem Diisocyanat und anschließend mit einem aminofunktionellen Alkoxysilan z.B. in US 7,365,145, US 3,627,722 oder US 3,632,557 beschrieben wird. Die Bindegruppe ist dabei ein Urethan- und Harnstoffgruppen tragender Rest.

Weiterhin kennt der Fachmann Urethan- und Harnstoff-freie silylterminierte Polyether, in denen die terminalen Alkoxysilylgruppen über eine Etherfunktion direkt an das Polymergerüst angebunden sind, wie sie in US 3,971,751 beschrieben sind. Sie bestehen bevorzugt aus einem Polyethergrundgerüst und sind als MS Polymere-Produkte von Kaneka erhältlich. Auch Alkoxysilylgruppen tragende Polysiloxane wie z.B. in WO 2007/061847 beschrieben.

Des Weiteren sind Alkoxysilylgruppen tragende Hydroxylverbindungen bekannt, die durch Alkoxylierung von epoxyfunktionellen Alkoxysilanen an Doppelmetallcyanid (DMC)-Katalysatoren gemäß der noch nicht veröffentlichten Schrift DE 10 2008 000360.3 hergestellt werden. Deren Verwendung als ggfs. schäumbare Kleb- und Dichtstoffe sowie Beschichtungsmittel ist in der noch nicht veröffentlichten Schrift DE 10 2008 043218.0 beschrieben. Die noch nicht veröffentlichte Schrift DE 10 2009 022628.1 offenbart Verfahren zur Modifizierung von flächigen und Partikeloberflächen durch Silylgruppen tragende Hydroxylverbindungen. In der noch nicht veröffentlichten Schrift DE 10 2009 022627.3 wird die Verwendung der aus epoxyfunktionellen Alkoxysilanen gewonnenen Polyether als Keramikbindemittel speziell zur Herstellung von Feuerfestwerkstoffen beschrieben. Ebenso bekannt ist die in der noch nicht veröffentlichten Schrift DE 10 2009 022630.3 offenbarte Herstellung von wässerigen Emulsionen und deren Anwendungen als Rohstoffe für z.B. Lacke, Klebstoffe, kosmetische Produkte, Beschichtungen, Bautenschutzmittel, Dichtungsmassen. Wie in DE 10 2009 022631.1 ausgeführt, sind auch härtbare Zusammensetzungen der gemäß DE 10 2008 000360.3 hergestellten Silylpolyether bekannt, sowie deren Anwendung als Grundstoffe für die Herstellung von Kleb- und Dichtstoffen, zur Oberflächenbeschichtung und -modifizierung, als reaktive Vernetzer, als Haftvermittler, Spreiter und z.B. Primer.

Angesichts des hochmolekularen Aufbaus ist die Silylmodifizierung der Polymere nur ungenügend, um die angestrebte gute Substrathaftung zu gewährleisten. Daher bezieht sich die Lehre der DE 10 2006 054 155 auf die Option, freie Silane der PU-Matrix hinzuzusetzen, um die Eingangs diskutierten gewünschten Effekte (Haftvermittlung, Trocknung, Vernetzung u.ä.) hervorzurufen. Sichergestellt ist hiermit keinesfalls der zielgerichtete Einbau von Silanankergruppen an den Stellen des Polymers, die deren positiver Wirkung bedürfen.

Der Bedarf nach einem technisch einfachen, sicheren und insbesondere reproduzierbaren Verfahren ist somit gegeben. Den bekannten Verfahren mangelt es an der Freiheit, jenseits des bekannten α,ω-Funktionalisierungsprinzips Präpolymerstrukturen zugänglich zu machen, die eine molekulare Präsenz härtbarer Gruppierungen (= Summe von Isocyanato- und Silylfunktionen pro Molekül) größer als 2 besitzen und darüber hinaus eine in das Belieben des Synthetikers gestellte Wahlmöglichkeit bieten, das Verhältnis der härtbaren Gruppierungen (Isocyanato-/Alkoxysilylfunktionen) zueinander auf die damit angestrebten anwendungstechnischen Erfordernisse in weiten Bereichen einzustellen.

Darüber hinaus ist es ein dem Fachmann bekannter Mangel, dass konventionelle silylterminierte Polyurethane auf Grund der in ihrem chemischen Aufbau begründeten hohen Viskosität nur eingeschränkt anwendbar sind, wie in US 7,365,145 herausgestellt wird. Dies gilt besonders, wenn im Bereich von Dicht- und Klebstoffsystemen übliche Mengen von 30-50 Gew.-% an anorganischen Füllstoffen wie Calciumcarbonat oder Silikate hinzugefügt werden. Daher werden Polymeren dieses Typs nach Stand der Technik Verdünner zugesetzt. Dies können sowohl reaktive Verdünner, die nicht nur die Viskosität erniedrigen, sondern gleichzeitig die Vernetzungsdichte erhöhen, wie monomere Alkoxysilane, als auch nicht reaktive Verdünner bzw. Lösemittel sein, welche zusätzlich weichmachende Eigenschaften haben können. Ein typischer Vertreter dieser Klasse von silylterminierten Polyurethanen ist z.B. Desmoseal^{©} S XP 2636 von Bayer Material Science mit einer Viskosität von ca. 40.000 mPas (23 °C).

Mit Hilfe gezielter Allophanatisierung wird nach Stand der Technik versucht, die auf starken intermolekularen Wasserstoffbrücken und dipolaren Wechselwirkungen der Urethan und ggfs. Harnstoffeinheiten miteinander beruhenden hohen Viskositäten entgegen zu wirken, ohne jedoch das Defizit der geringen Vernetzungsdichte beheben zu können.

Die WO 2007/025667 beschreibt modifizierte Alkoxysilangruppen aufweisende Polyurethanpräpolymere, die eine deutlich reduzierte Viskosität aufweisen sollen. Nachteilig ist allerdings die relativ geringe Dichte an vernetzbaren Silylgruppen.

Unter Würdigung des hier dargelegten Standes der Technik definiert sich die zu lösende technische Aufgabe darin, neuartige Dicht- und Klebstoffe, Binde- und Modifizierungsmittel aus urethangruppenhaltigen silylierten Präpolymeren bereitzustellen, die durch vergleichsweise niedrigere Viskositäten die Nachteile beschriebener Alkoxysilan-modifizierter Polyurethanpräpolymere vermeiden.

Gelöst wird die Aufgabe durch neuartige härtbare Massen enthaltend Reaktionsprodukte aus Alkoxysilylverbindungen und Isocyanaten.

Gegenstand der vorliegenden Erfindung sind härtbare Massen enthaltend urethangruppenhaltige Reaktionsprodukte, die erhältlich ist durch die Umsetzung von
a) mindestens einer eine oder mehrere Isocyanatgruppen aufweisenden Verbindungen mit
b) mindestens einer eine oder mehrere Alkoxysilylgruppen tragenden Verbindung, die zusätzlich mindestens eine Hydroxylgruppe trägt
c) optional in Anwesenheit von einem oder mehreren Katalysatoren
d) optional in Anwesenheit von weiteren gegenüber den Reaktionsprodukten reaktiven Komponenten, insbesondere solchen, die funktionelle Gruppen mit protischem Wasserstoff besitzen,
e) optional in Anwesenheit von weiteren gegenüber den Reaktionsprodukten und Edukten nicht reaktiven Verbindungen,
wobei als Komponente (b) des Anspruchs 1 eine oder mehrere Silylverbindungen 1 der Formel (2) 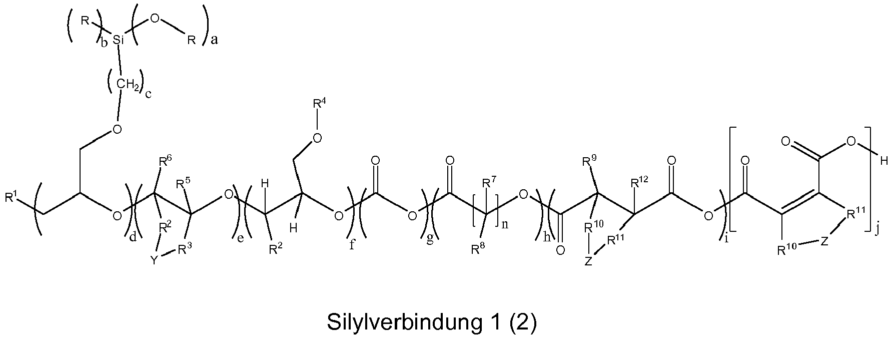 wobei
- a: eine ganze Zahl von 1 bis 3 ist,
- b: eine ganze Zahl von 0 bis 2 ist, und die Summe von a und b gleich 3 ist,
- c: eine ganze Zahl von 0 bis 22 ist,
- d: eine ganze Zahl von 2 bis 500 ist,
- e: eine ganze Zahl von 2 bis 10.000 ist,
- f: eine ganze Zahl von 0 bis 1.000 ist,
- g: eine ganze Zahl von 0 bis 1.000 ist,
- h,: i und j unabhängig voneinander ganze Zahlen von 0 bis 500 sind,
- n: eine ganze Zahl zwischen 2 und 8 ist,
- R: unabhängig voneinander einen oder mehrere gleiche oder verschiedene Reste, ausgewählt aus linearen oder verzweigten, gesättigten, einfach oder mehrfach ungesättigten Alkylresten mit 1 bis 20 Kohlenstoffatomen oder Halogenalkylgruppen mit 1 bis 20 Kohlenstoffatomen darstellt; sowie,
- R¹: ist eine Hydroxylgruppe oder ein gesättigter oder ungesättigter linearer, verzweigter oder cyclischer oder weiter substituierter oxyorganischer Rest mit 1 bis 1.500 Kohlenstoffatomen, wobei die Kette auch durch Heteroatome wie O, S, Si und/oder N unterbrochen sein kann, oder ein oxyaromatisches System enthaltender Rest,
- R² oder R³, sowie R⁵ oder R⁶: sind gleich oder auch unabhängig voneinander H oder ein gesättigter Kohlenwasserstoffrest, ist Y nicht vorhanden,
- R⁴: unabhängig voneinander ein linearer oder verzweigter Alkylrest von 1 bis 24 Kohlenstoffatomen oder ein aromatischer oder cycloaliphatischer Rest ist, der gegebenenfalls seinerseits Alkylgruppen tragen kann;
- R⁷ und R⁸: sind unabhängig voneinander entweder Wasserstoff, Alkyl-, Alkoxy-, Aryl- oder Aralkylgruppen,
- R⁹, R¹⁰, R¹¹ und R¹²: sind unabhängig voneinander entweder Wasserstoff, Alkyl-, Alkenyl-, Alkoxy-, Aryl- oder Aralkylgruppen, wobei der Kohlenwasserstoffrest cycloaliphatisch oder aromatisch über das Fragment Z verbrückt sein kann und Z sowohl einen divalenten Alkylen- als auch Alkenylenrest darstellen kann,
mit der Maßgabe, dass die Fragmente mit den Indices d, e, f, und/oder h untereinander frei permutierbar, das heißt innerhalb der Polyetherkette gegeneinander austauschbar sind und wahlweise statistisch verteilt oder blockartig aneinandergereiht vorliegen können und damit in der Sequenz innerhalb der Polymerkette gegeneinander austauschbar sind,
wobei cyclische Anhydride sowie Kohlendioxid nicht in homologen Blöcken vorliegen,
wobei bezogen auf das individuelle Molekül des Reaktionsprodukts im Durchschnitt mehr als eine Alkoxysilylgruppe pro Urethan- oder deren Reaktionsfolgeprodukte, wie beispielsweise Allophanate und/oder Biuret-Gruppen oder auch Harnstoffgruppen enthalten sind,
verwendet wird.

Ein weiterer Gegenstand der vorliegenden Erfindung ist daher die Bereitstellung neuartiger härtbarer Massen enthaltend urethangruppenhaltige (Prä-)Polymere und/oder Reaktionsprodukte, erhältlich durch die Umsetzung von
a) mindestens einer eine oder mehrere Isocyanatgruppen aufweisenden Verbindung mit
b) mindestens einer eine oder mehrere Alkoxysilylgruppen tragenden Verbindung, die zusätzlich mindestens eine Hydroxylgruppe trägt,
c) optional in Anwesenheit von einem oder mehreren Katalysatoren,
d) optional in Anwesenheit von weiteren gegenüber den Reaktionsprodukten reaktiven Komponenten, insbesondere solchen, die funktionelle Gruppen mit protischem Wasserstoff besitzen, wie beispielsweise Alkoholen, Aminen, Thiolen, fluororganische Hydroxyverbindungen, Alkoxysilanen und/oder Wasser
e) optional in Anwesenheit von weiteren gegenüber den Reaktionsprodukten und Edukten nicht reaktiven Verbindungen wie beispielsweise Lösemitteln, Prozesshilfsmitteln und/oder Suspensionsmitteln, sowie Zusammensetzungen die diese härtbaren Massen enthalten.

Gegenstand der vorliegenden Erfindung sind somit härtbare Massen enthaltend urethangruppenhaltige Polymerzusammensetzungen, die erhältlich sind durch die Umsetzung von einer oder mehrere Isocyanatgruppen aufweisenden Verbindungen mit einer oder mehrere Alkoxysilyl- und Hydroxylgruppen tragenden Verbindungen.

In einer bevorzugten Ausführungsform trägt die Isocyanatgruppen aufweisende Komponente (a) keine Alkoxysilyl- und/oder Alkylsilylgruppen.

Ein weiterer Gegenstand der Erfindung ist die Verwendung der urethangruppenhaltigen härtbaren Massen als Bestandteil von härtbaren Dicht- und Klebstoffen, Binde- und Modifizierungsmitteln und die so hergestellten Dicht- und Klebstoffe, Binde- und Modifizierungsmittel selbst, wobei die Alkoxysilylgruppen wahlweise einfach oder mehrfach, und zwar terminal oder innerhalb der Polymerkette, sowie wahlweise auch zusätzliche Isocyanatgruppen endständig enthalten können.

Die so erhaltenen neuartigen Dicht- und Klebstoffe, Binde- und Modifizierungsmittel ermöglichen durch ihre Anwendungseigenschaften wie Reaktivität, Vernetzungsdichte, Haftung, mechanische Eigenschaften und z.B. Viskosität eine flexible Anbindung über die Polymerstruktur an das jeweils zu modifizierende Substrat bzw. an die zu verklebenden oder zu dichtenden Oberflächen.

Insbesondere zeichnet diese neuartigen Dicht- und Klebstoffe, Binde- und Modifizierungsmittel aus, dass sie wahlweise sowohl über die in ihnen enthaltenen Isocyanatgruppen und/oder Hydroxylgruppen aber auch über die darin inkorporierten Alkoxysilygruppen weitermodifiziert werden können.

Ein weiterer Aspekt dieser Erfindung liegt darin, ein technisch einfaches und wirtschaftliches Verfahren zur Herstellung dieser neuen Dicht- und Klebstoffe, Binde- und Modifizierungsmittel zur Verfügung zu stellen.

Gegenstand dieser Erfindung sind urethangruppenhaltige neuartige Dicht- und Klebstoffe, Binde- und Modifizierungsmittel, die erhalten werden durch die Umsetzung von ein oder mehrere Isocyanatgruppen aufweisenden Verbindungen mit einer oder mehreren Alkoxysilyl- und Hydroxylgruppen tragenden Verbindungen, insbesondere Silylverbindungen 1 (Formel 2).

Eine Silylgruppe im Rahmen dieser Erfindung ist dadurch gekennzeichnet, dass sie neben mindestens einer Alkoxyfunktion ein oder zwei Alkylfunktionen oder ein oder zwei weitere Alkoxyfunktionen an einem Siliciumatom aufweist, wobei die in den Resten vorhandenen organischen oder oxyorganischen Gruppen gleich oder verschieden sein können.

Die Herstellung der Silylverbindungen 1 und die einsetzbaren Epoxid-Strukturtypen sind ausführlich in der nicht vorveröffentlichen DE 10 2008 000360.3 beschrieben und können so beispielsweise durch Alkoxylierung von epoxyfunktionellen Alkoxysilanen an Doppelmetallcyanid-Katalysatoren hergestellt werden.

Ein weiterer Gegenstand der Erfindung ist daher die eine härtbare Masse enthaltend einen oder mehrere Silylverbindungen 1 der Formel 2 als Komponente (b): 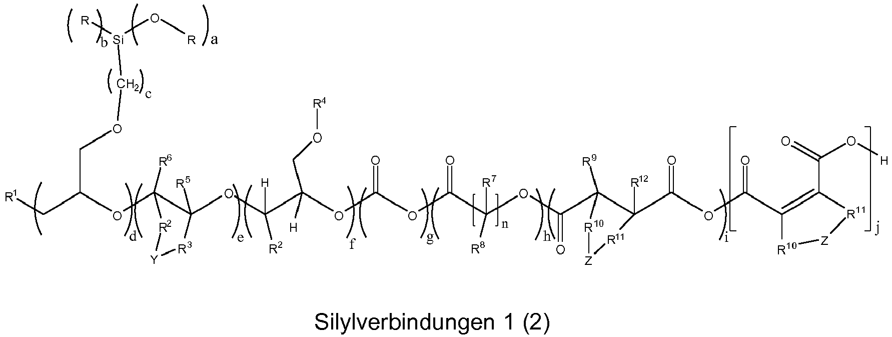 wobei
- a: eine ganze Zahl von 1 bis 3, vorzugsweise 3 ist,
- b: eine ganze Zahl von 0 bis 2, vorzugsweise 0 bis 1, besonders bevorzugt 0 ist, und die Summe von a und b gleich 3 ist,
- c: eine ganze Zahl von 0 bis 22, vorzugsweise von 0 bis 12, besonders bevorzugt von 0 bis 8, ganz besonders bevorzugt von 0 bis 4 und insbesondere gleich 1 oder 3 ist,
- d: eine ganze Zahl von 2 bis 500 ist, bevorzugt 2 bis 100, besonders bevorzugt 2 bis 20 und insbesondere bevorzugt 2 bis 10,
- e: eine ganze Zahl von 2 bis 10.000, bevorzugt 2 bis 2000, besonders bevorzugt 2 bis 2000 und insbesondere 2 bis 500 ist,
- f: eine ganze Zahl von 0 bis 1.000, bevorzugt 0 bis 100, besonders bevorzugt 0 bis 50 und insbesondere 0 bis 30 ist,
- g: eine ganze Zahl von 0 bis 1.000, bevorzugt 0 bis 200, besonders bevorzugt 0 bis 100 und insbesondere 0 bis 70 ist,
- h, i und j: unabhängig voneinander ganze Zahlen von 0 bis 500, bevorzugt 0 bis 300, besonders bevorzugt 0 bis 200 und insbesondere 0 bis 100 sind,
- n: eine ganze Zahl zwischen 2 und 8 ist
und mit der Maßgabe, dass die Fragmente mit den Indices d bis j untereinander frei permutierbar, d.h. in der Sequenz innerhalb der Polyetherkette gegeneinander austauschbar sind und
- R: einen oder mehrere gleiche oder verschiedene Reste, ausgewählt aus linearen oder verzweigten, gesättigten, einfach oder mehrfach ungesättigten Alkylresten mit 1 bis 20, insbesondere 1 bis 6 Kohlenstoffatomen oder Halogenalkylgruppen mit 1 bis 20 Kohlenstoffatomen darstellt. Bevorzugt entspricht R Methyl-, Ethyl-, Propyl-, Isopropyl-, n-Butyl- und sek.-Butylgruppen; sowie
- R¹: ist eine Hydroxylgruppe oder ein gesättigter oder ungesättigter linearer, verzweigter oder cyclischer oder weiter substituierter oxyorganischer Rest mit 1 bis 1.500 Kohlenstoffatomen, wobei die Kette auch durch Heteroatome wie O, S, Si und/oder N unterbrochen sein kann, oder ein oxyaromatisches System enthaltender Rest, vorzugsweise eine Alkoxy-, Arylalkoxy- oder Alkylarylalkoxygruppe und insbesondere ein Polyetherrest, bei dem die Kohlenstoffkette durch Sauerstoffatome unterbrochen sein kann, oder eine einfach oder mehrfach annelierte oxyaromatische Gruppe oder ein gegebenenfalls verzweigter siliconhaltiger organischer Rest
- R² oder R³, sowie R⁵ oder R⁶: sind gleich oder auch unabhängig voneinander H oder ein gesättigter Kohlenwasserstoffrest, ist Y nicht vorhanden.
- R⁴: unabhängig voneinander ein linearer oder verzweigter Alkylrest von 1 bis 24 Kohlenstoffatomen oder ein aromatischer oder cycloaliphatischer Rest ist, der gegebenenfalls seinerseits Alkylgruppen tragen kann;
- R⁷ und R⁸: sind unabhängig voneinander entweder Wasserstoff, Alkyl-, Alkoxy-, Aryl- oder Aralkylgruppen,
- R⁹, R¹⁰, R¹¹ und R¹²: sind unabhängig voneinander entweder Wasserstoff, Alkyl-, Alkenyl-, Alkoxy-, Aryl- oder Aralkylgruppen. Der Kohlenwasserstoffrest kann cycloaliphatisch oder aromatisch über das Fragment Z verbrückt sein, wobei Z sowohl einen divalenten Alkylen- als auch Alkenylenrest darstellen kann,
mit der Maßgabe, dass die Fragmente mit den Indices d, e, f, und/oder h untereinander frei permutierbar, das heißt innerhalb der Polyetherkette gegeneinander austauschbar sind und wahlweise statistisch verteilt oder blockartig aneinandergereiht vorliegen können und damit in der Sequenz innerhalb der Polymerkette gegeneinander austauschbar sind.

Die Verbindungen der Formel (2) werden mangels einer ihre Zusammensetzung dezidiert beschreibenden Nomenklatur im Weiteren als Silylverbindungen 1 bezeichnet, auch wenn die Struktur gegebenenfalls nicht die Merkmale eines polymeren Ethers im üblichen Sinn umfasst. Für den Fachmann ist jedoch die strukturelle Übereinstimmung von Polyetherstrukturelementen mit denen der Silylverbindungen 1 deutlich und klar ersichtlich.

Im Rahmen dieser Erfindung umfasst der Begriff Polyether sowohl Polyether, Polyetherole, Polyetheralkohole, Polyetherester aber auch Polyethercarbonate, die gegebenenfalls synonym zueinander verwendet werden. Dabei ist nicht erforderlich, dass der Ausdruck "Poly" damit einhergehen muss, dass es sich um eine Vielzahl von Etherfunktionalitäten oder Alkoholfunktionalitäten im Molekül oder Polymer handelt. Vielmehr wird dadurch nur angedeutet, dass zumindest Wiederholungseinheiten einzelner Monomerbausteine oder aber Zusammensetzungen vorliegen, die eine höhere Molmasse aufweisen und zudem auch noch eine gewisse Polydispersität aufweisen.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition im Sinne von OECD- oder REACH-Richtlinien zu genügen scheinen.

R¹ ist ein Fragment, das dem Starter oder den Startverbindungen für die Alkoxylierungsreaktion entstammt gemäß Formel (3)

R¹-H Formel (3)

(das H gehört zur OH-Gruppe eines Alkohols oder einer phenolischen Verbindung), wobei Starter der Formel (3) allein oder in Mischungen miteinander eingesetzt werden können und mindestens eine reaktive Hydroxylgruppe aufweisen; der Starter kann somit auch Wasser sein.

Als OH-funktionelle Startverbindungen R¹-H (3) werden vorzugsweise Verbindungen mit Molmassen von 18 (Wasser) bis 10.000 g/mol, insbesondere 50 bis 2000 g/mol und mit 1 bis 8, bevorzugt mit 1 bis 4 Hydroxylgruppen eingesetzt.

Bevorzugt werden als Starter der Formel (3) solche eingesetzt, bei denen R¹ eine Hydroxylgruppe oder ein gesättigter oder ungesättigter linearer, verzweigter oder cyclischer oder weiter substituierter oxyorganischer Rest mit 1 bis 1.500 Kohlenstoffatomen ist, der gegebenenfalls auch durch Heteroatome wie O, S, Si oder N unterbrochen sein kann, oder ein oxyaromatisches System enthaltender Rest; vorzugsweise ist R¹ eine Alkoxy-, Arylalkoxy- oder Alkylarylalkoxygruppe und insbesondere ein Polyetherrest, bei dem die Kohlenstoffkette durch Sauerstoffatome unterbrochen sein kann, oder eine einfach oder mehrfach annelierte oxyaromatische Gruppe oder ein gegebenenfalls verzweigter siliconhaltiger organischer Rest.

Weiterhin kann R¹-H ein oxyalkylfunktionelles Siloxan oder ein oxyfunktionelles Polyethersiloxan darstellen.

Die Kettenlänge der als Startverbindung einsetzbaren Alkoxy-, Arylalkoxy- oder Alkylarylalkoxygruppen aufweisenden Polyetherreste ist beliebig. Vorzugsweise enthält die Polyether-, Alkoxy-, Arylalkoxy- oder Alkyarylalkoxygruppe 1 bis 1.500 Kohlenstoffatome, besonders bevorzugt 2 bis 300 Kohlenstoffatome, insbesondere 2 bis 100 Kohlenstoffatome.

Vorzugsweise sind die Verbindungen der Formel (3) ausgewählt aus der Gruppe der Alkohole, Polyetherole oder Phenole. Bevorzugt wird als Startverbindung ein ein- oder mehrwertiger Polyetheralkohol oder Alkohol R¹-H (das H gehört zur OH-Gruppe des Alkohols oder Phenols) oder auch Wasser eingesetzt.

Vorteilhaft werden niedermolekulare Polyetherole mit 1 bis 8 Hydroxylgruppen und Molmassen von 50 bis 2000 g/mol, die ihrerseits zuvor durch DMC-katalysierte Alkoxylierung hergestellt wurden, als Starterverbindungen (3) verwendet.

Beispielhaft für Verbindungen der Formel (3) seien Wasser, Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, Cellulosezucker, Lignin oder auch weitere auf Naturstoffen basierende, Hydroxylgruppen tragende Verbindungen, genannt.

Neben Verbindungen mit aliphatischen und cycloaliphatischen OH-Gruppen eignen sich beliebige Verbindungen mit 1 bis 20 phenolischen OH-Funktionen. Hierzu gehören beispielspweise Phenol, Alkyl- und Arylphenole, Bisphenol A und Novolake.

Die so hergestellten Verbindungen gewähren die synthetische Freiheit, zwischen Alkoxysilylgruppen aufweisenden Polyoxyalkylenverbindungen zu wählen, die Alkoxysilylfunktionen sowohl terminal, als auch isoliert, blockartig kumuliert als aber auch statistisch eingestreut in die Polyoxyalkylenkette enthalten.

Die Silylverbindungen 1 der Formel (2) zeichnen sich dadurch aus, dass sie hinsichtlich Strukturaufbau und Molmasse gezielt und reproduzierbar hergestellt werden können. Die Sequenz der Monomereinheiten kann in weiten Grenzen variabel gestaltet werden. Epoxidmonomere können beliebig blockartig aneinander gereiht oder statistisch in die Polymerkette eingebaut sein. Die durch die Reaktion unter Ringöffnung der Reaktionskomponenten in die entstehende Polymerkette eingefügten Fragmente sind in ihrer Sequenz untereinander frei permutierbar, mit der Einschränkung, dass cyclische Anhydride sowie Kohlendioxid statistisch insertiert, also nicht in homologen Blöcken, in der Polyetherstruktur vorliegen.

Silylverbindungen der Formel (2) bestehen aus Alkoxysilylgruppen substituierten Ketten, die durch die Wahl der Fragmente d bis j, entsprechend der durch die Reaktion unter Ringöffnung der Reaktionskomponenten in die Polymerkette eingefügten Fragmente, gezielt hochfunktionalisiert sind und damit für verschiedenartige Anwendungsgebiete zugeschnitten werden können.

Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für als solche an sich exakt wiedergegebenen Strukturformeln, wie beispielsweise für Formel (2) und/oder (3).

Je nach verwendetem epoxidfunktionellem Alkoxysilan und evtl. eingesetzten weiteren Monomeren, sowie evtl. auch Kohlendioxid können ester- oder carbonatmodifizierte Silylverbindungen erhalten werden. Bevorzugt ist die Alkoxysilyleinheit in der Verbindung der Formel (2) eine Trialkoxysilyleinheit.

Wie ²⁹Si-NMR- und GPC-Untersuchungen ergeben, bedingt das verfahrensbedingte Vorhandensein von kettenendständigen OH-Gruppen die Möglichkeit zu Umesterungsreaktionen am Siliziumatom sowohl während der DMC-katalysierten Herstellung als auch z.B. in einem nachgeschalteten Prozessschritt. Dabei wird formal der über ein Sauerstoffatom an das Silizium gebundene Alkylrest R gegen einen langkettigen modifizierten Alkoxysilylpolymerrest ausgetauscht. Bimodale wie auch multimodale GPC Kurven belegen, dass die Alkoxylierungsprodukte neben den nicht umgeesterten Spezies, wie sie in Formel (2) wiedergegeben sind, solche mit der doppelten, zum Teil dreifachen oder gar vielfachen Molmasse enthalten. Formel (2) gibt mithin die komplexe chemische Realität nur vereinfacht wieder.

Somit stellen die Silylverbindungen 1 Zusammensetzungen dar, die auch Verbindungen enthalten, in denen die Summe der Indices (a) plus (b) in Formel (2) im statistischen Mittel kleiner als 3 ist, da ein Teil der OR-Gruppen durch Silylpolyethergruppen ersetzt werden kann. Die Zusammensetzungen enthalten somit Spezies, die am Siliziumatom unter Abspaltung von R-OH und Kondensationsreaktion mit der reaktiven OH-Gruppe eines weiteren Moleküls der Formel (2) ausgebildet werden. Diese Reaktion kann mehrfach ablaufen bis z.B. alle RO-Gruppen am Silizium gegen weitere Moleküle der Formel (2) ausgetauscht sind. Das Vorhandensein von mehr als einem Signal in typischen ²⁹Si-NMR-Spektren dieser Verbindungen untermauert das Auftreten von Silylgruppen mit unterschiedlichem Substitutionsmuster.

Die angegebenen Werte und Vorzugsbereiche für die Indizes (a) bis (j) sind somit auch nur als Mittelwerte über die verschiedenen, einzeln nicht fassbare Spezies zu verstehen. Die Vielfalt an chemischen Strukturen und Molmassen spiegelt sich auch in den für Silylverbindungen 1 typischen und für konventionelle DMC-basierende Polyether völlig ungewöhnlichen breiten Molmassenverteilungen von M_{w}/Mₙ von meist ≥ 1,5 wider.

Bei den Methoden des Standes der Technik können nur Silylgruppen-terminierte Präpolymere gebildet werden. Die als Reaktivkomponente eingesetzten Silylverbindungen 1 unterscheiden sich von nach klassischen Methoden modifizierten Oligomeren oder Polymeren darin, dass durch den gezielten Kettenaufbau und die variable Insertion von funktionellen Gruppen in blockartiger aber auch isolierter Weise Strukturen gebildet werden, die sowohl eine Silyl-Funktionalisierung verstreut oder blockartig verteilt über die gesamte Kette aufweisen und zudem zusätzlich aber nicht zwingend erforderlich auch an den Termini eine Silylfunktionalisierung tragen können.

Untrennbar mit dem in der DE 10 2008 000360.3 dargelegten Verfahren der Alkoxylierung von expoxyfunktionellen Alkoxysilanen verbunden, ist die Besonderheit, dass an den Termini immer eine OH-Funktionalität vorhanden ist, hervorgegangen aus der Epoxidringöffnung des jeweils letzten Epoxidmonomers unter Anknüpfung an das OH-funktionelle Ende der wachsenden Kette. Gerade diese terminale OH-Funktionalität der hier als Reaktivkomponente eingesetzten Silylverbindungen erschließt deren weitere Funktionalisierung mit Isocyanatogruppen aufweisenden Verbindungen unter Bildung einer Urethanverknüpfung.

Als isocyanatgruppenhaltige Verbindungen eignen sich alle bekannten Isocyanate. Bevorzugt im Sinne der erfindungsgemäßen Lehre sind z.B. aromatische, aliphatische und cycloaliphatische Polyisocyanate mit einer zahlenmittleren Molmasse von unter 800 g/mol. So sind beispielsweise geeignet Diisocyanate aus der Reihe 2,4-/2,6-Toluoldüsocyanat (TDI), Methyldiphenyldüsocyanat (MDI), Triisocyanatononan (TIN), Naphthyldüsocyanat (NDI), 4,4'-Düsocyanatodicyclohexylmethan, 3-Isocyanatomethyl-3,3,5-trimethylcyclohexylisocyanat (Isophorondiisocyanat = IPDI), Tetramethylendüsocyanat, Hexamethylendiisocyanat (HDI), 2-Methylpentamethylendiisocyanat, 2,2,4-Trimethyl-hexamethylendüsocyanat (THDI), Dodecamethylendüsocyanat, 1,4-Diisocyanato-Cyclohexan, 4,4'-Diisocyanato-3,3'-dimethyl-dicyclohexylmethan, 4,4'-Diisocyanatodicyclohexylpropan-(2,2), 3-Isocyanatomethyl-1-methyl-1-isocyanatocyclohexan (MCI), 1,3-Diisooctylcyanato-4-methyl-cyclohexan, 1,3-Diisocyanato-2-methyl-cyclohexan und α,α,α,α,'-Tetramethyl-m- oder -p-xylylen-diisocyanat (TMXDI), sowie aus diesen Verbindungen bestehende Gemische.

Bevorzugte Ausgangsstoffe für die Herstellung der urethangruppenhaltigen Verbindungen sind Hexamethylendiisocyanat (HDI), Isophorondiisocyanat (IPDI) und/oder 4,4'-Diisocyanatodicyclohexylmethan.

Ebenfalls geeignet als isocyanathaltige Ausgangskomponenten sind Umsetzungsprodukte der zuvor erwähnten Isocyanate mit sich selbst oder untereinander zu Uretdionen oder Isocyanuraten. Beispielhaft seien genannt Desmodur^{®} N3300, Desmodur^{®} N3400 oder Desmodur^{®} N3600 (alle BayerMaterialScience, Leverkusen,DE).

Weiterhin geeignet sind auch Derivate von Isocyanaten, wie Allophanate oder Biurete. Beispielhaft genannt seien Desmodur^{®} N100, Desmodur^{®} N75MPA/BA oder Desmodur^{®} VPLS2102 (alle BayerMaterialScience, Leverkusen,DE).

Werden derartige Polyisocyanate mit Silylpolyethern umgesetzt, welche mehr als eine reaktive OH-Gruppe im Molekül aufweisen, werden, so werden lineare oder verzweigte Copolymere gebildet, in denen die Silylpolyether- und Isocyanatfragmente alternierend über Urethangruppen miteinander verknüpft sind. Wird die Isocyanatkomponente im molaren Überschuss bezüglich der Silylpolyetherkomponente eingesetzt, so entstehen endständig NCO-Gruppen tragende reaktive Präpolymere mit zusätzlicher Alkoxysilylfunktionalität. Durch Weiterreaktion an den Urethangruppen mit Isocyanaten lassen sich ferner Allophanatstrukturen aufbauen und zusätzliche Verzweigungen in das Gerüst der Präpolymeren einbauen.

Wird im anderen Fall die Silylverbindung 1 im Überschuss eingesetzt, so entstehen Alkoxysilylgruppen tragende urethanisierte Polyole mit terminalen OH-Gruppen.

Die Silylverbindungen 1 können auch mit monofunktionellen Isocyanaten modifiziert werden. Im einfachsten Fall werden dabei Alkyl-, Aryl-, Arylalkylisocyanate mit den OH-Gruppen der Silylverbindung unter Bildung des jeweiligen Addukts und gleichzeitigem Endverkappen des reaktiven Kettenendes der eingesetzten Silylverbindung umgesetzt. Hierfür eignen sich z.B. Methyl-, Ethyl-, Butyl-, Hexyl-, Octyl-, Dodecyl-, Stearylisocyanat.

Besonders geeignete monofunktionelle Isocyanate sind solche, die ihrererseits vernetzbare Alkoxysilylgruppen im Molekül tragen. Hierzu gehören bevorzugt Isocyanatoalkyl-trialkoxysilane und Isocyanatoalkylalkyldialkoxysilane.

Als alkoxysilanfunktionelle Monoisocyanate können Isocyanatotrimethoxysilan, Isocyanatomethyltriethoxysilan, (Isocyanatomethyl)methyldimethoxysilan, (Isocyanatomethyl)methyldiethoxysilan, 3-Isocyanatopropyltrimethoxysilan, 3-Isocyanatopropylmethyldimethoxysilan, 3-Isocyanatopropyltriethoxysilan und 3-Isocyanatopropylmethyldiethoxysilan eingesetzt werden. Bevorzugt ist hier die Verwendung von 3-Isocyanatopropyltrimethoxysilan und -triethoxysilan.

Auf diesem chemischen Wege lassen sich endständig um jeweils eine zusätzliche Alkoxysilylgruppe bereicherte modifizierte Silylverbindungen gewinnen. Die Umsetzung der alkoxysilanfunktionellen Monoisocyanate ist bislang nur von konventionellen OH-funktionellen Polymeren wie Polyethern bekannt, die selbst keine Alkoxysilylgruppen aufweisen. Derartige Produkte und Verfahren werden z.B. in den folgenden Schriften beschrieben.

Für den Fachmann vollkommen überraschend ist, dass die in den erfindungsgemäßen härtbaren Massen enthaltenen Urethangruppen aufweisenden härtbaren Präpolymere erstaunlich niedrige Viskositäten aufweisen im unmittelbaren Vergleich mit Molekulargewichts-analogen Verbindungen des Standes der Technik, wie sie z.B. für die Desmoseal^{®}-Produkte in einer Broschüre der Bayer MaterialScience mit dem Titel "Prepolymers: Products and Applications", http://www.bayercoatings.de/BMS/DB-RSC/BMS_RSC_CAS.nsf/-files/Broschueren/$file/MS00030480-E_ECS_Prepolymer_04_08.pdf, Seite 18, offenbart sind. Dort sind Viskositäten von 35.000 mPas angegeben.

Die erfindungsgemäßen Kleb- und Dichtstoffe, Bindemittel und Modifizierungsmittel können chemisch durch Folgereaktionen an den NCO- oder/und Alkoxysilylfunktionen modifiziert sein, beispielsweise durch Umsetzung mit ein- oder mehrfachfunktionellen Alkohole, wie Methanol, Ethanol, Butanol, Glycerin, Trimethylolpropan, 2-Ethylhexylalkohol oder fluorierten Alkoholen, wie 2,2,2-Trifluorethanol oder acrylierten Alkoholen, wie Hydroxyethylacrylat, Hydroxypropylacrylat, Hydroxybutylacrylat oder Poletherdiolen oder Polyesterdiolen oder Polytetrahydrofuran ebenso durch Umsetzungen mit Siliconpolyethercopolymeren, die OH-funktionelle Polyetherreste aufweisen, aminofunktionellen Polymere wie Polyethern und Polysiloxanen, oder 3-Aminopropyl-trialkoxysilanen, generell Aminen, Alkoxysilanen, organischen Säurechloriden, fluororganischen Verbindungen, etc., um damit besondere Eigenschaften des härtbaren Präpolymers einzustellen oder zu betonen. Auf diese Art und Weise lassen sich gegebenenfalls weitere funktionelle Gruppen in das Molekül einbringen.

Auch besteht damit die Möglichkeit, gezielt die Molmasse und/oder die Viskosität der Produkte zu beeinflussen. So lassen sich mittlere Molmassen in einem weiten Bereich von 500 g/mol bis über 100.000 g/mol realisieren.

Hergestellt werden die erfindungsgemäßen Urethangruppen-haltigen Kleber, Dichtstoffe, Bindemittel und Modifizierungsmittel durch Umsetzung ein oder mehrerer Isocyanate mit ein oder mehreren Silylverbindungen 1. Im Herstellprozess werden die OH-Funktionen der Silylverbindungen 1 teilweise oder vollständig mit Isocyanatgruppen umgesetzt, so dass je nach Einsatzstoff und Stöchiometrie wahlweise OH-funktionelle oder NCO-funktionelle oder terminal verkappte urethanisierte härtbare Präpolymere entstehen. Auf diesem Wege lassen sich auch Dual-Cure-Systeme erhalten, die gleichzeitig oder nacheinander durch Vernetzungsreaktionen an den beiden Typen von reaktiven Gruppen zur Aushärtung gebracht werden können.

Gegebenenfalls ist zu beachten, dass ein Teil der NCO-Funktionen durch Nebenreaktionen umgesetzt wird, zum Beispiel bei der Bildung von Allophanaten.

Die erfindungsgemäßen härtbaren Massen enthaltend urethanisierte und silylierte Polymere können weitere reaktive Gruppen tragende Komponenten enthalten. Hierzu gehören alle Verbindungen mit mindestens einer Isocyanat-, Hydroxy-, Amino-, Epoxy- und ungesättigter C=C-Gruppe wie z.B. Acrylate, Methacrylate, Vinyl-, Allyl-Verbindungen.

Die erfindungsgemäßen Kleber, Dichtstoffe, Bindemittel und Modifizierungsmittel stellen auf Grund ihrer hydrolyseempfindlichen und zur Vernetzung neigenden Alkoxysilyl- und gegebenenfalls Isocyanatgruppen härtbare Polymere dar. Deren Vernetzung zu festen Endprodukten erfolgt auf einfache Weise in Gegenwart von Wasser und wahlweise unter Zusatz von Säure oder Base als Beschleuniger, wobei durch Erhöhung der Temperatur während des Härtungsvorgangs die Topfzeit gesteuert werden kann. Der Polymeraufbau dieser vernetzbaren Urethanpolymere kann auf mannigfaltige Weise variiert werden, um anwendungstechnische Produkteigenschaften auf den jeweiligen Verwendungszweck maßzuschneidern. So lässt sich durch eine Variation des Anteils an Alkoxysilaneinheiten in der Polymerkette die Vernetzungsdichte und damit das mechanische und physiko-chemische Eigenschaftsprofil der ausgehärteten Polymere in weiten Grenzen beeinflussen. Überraschenderweise sind hier selbst mit beachtlicher Alkoxysilyl-Funktionalisierungsdichte ausgestattete Produkte in der Regel gut handhabbare Flüssigkeiten, so dass auch im Falle angestrebter hochvernetzter, gut haftender Klebeverbindungen keinerlei Einschränkungen im Hinblick auf die Applikation dieser Komponenten zu verzeichnen sind. Diese Beobachtung differenziert die erfindungsgemäße Lehre von der in der DE 10 2006 054 155 dargelegten Vorgehensweise, die auf das Einbringen freier Silanmonomerer als Formulierungsbestandteile in den Endrezepturen abstellt, um zu gewährleisten, dass die notwendige Vernetzungsdichte bei gleichzeitig niedriger Verarbeitungsviskosität erzielt wird. Die im Hinblick auf ihre strukturelle Vielfalt kaum einzugrenzenden Alkoxysilylgruppen aufweisenden härtbaren urethanisierten Polymere eröffnen dem in der Polymerchemie vertrauten Fachmann durch den Einbau z.B. von Ester-, Carbonat- und aromatischen Strukturelementen in der Silylverbindung 1 und durch die Variation der Isocyanatkomponente eine Gestaltungsfreiheit, die nahezu beliebige anwendungstechnische Bedürfnisse adressiert.

Wie dem Fachmann bekannt ist, geschieht die Vernetzung oder Härtung von Alkoxysilylgruppen in einem zweistufigen chemischen Prozess, bei dem in einem ersten Schritt in Gegenwart von Wasser, wobei auch Luftfeuchtigkeit ausreichen kann, die am Silizium gebundenen Alkoxygruppen als korrespondierende Alkohole abgespalten und SiOH-Gruppen ausgebildet werden. Letztere kondensieren im Falle der Selbstkondensation anschließend unter Ausbildung von Si-O-Si-Brücken miteinander und bilden polymere Werkstoffe. Alternativ reagieren die SiOH-funktionellen Intermediate mit reaktive Gruppen aufweisenden Substraten, z.B. besonders gut mit OH-Funktionen tragenden silikatischen Oberflächen, und führen zu einer exzellenten chemischen Verankerung auf dem jeweiligen Untergrund. Die Härtungsgeschwindigkeit lässt sich auf vielfältige Weise durch Zusatz von Katalysatoren oder Temperaturvariation beeinflussen.

Enthält das Silanpräpolymer darüber hinaus NCO-Gruppen, so können diese in Gegenwart z.B. von OH-funktionellen Verbindungen wie Wasser, Alkoholen, Diolen, Polyolen, Polyetherolen, aromatischen Hydroxylverbindungen und/oder Aminen, Diaminen, Polyaminen ausgehärtet werden.

Als weitere Reaktivkomponente können Amine eingesetzt werden, die einerseits unter Ausbildung von Harnstoffgruppen an der Aushärtung teilhaben und andererseits katalytische Wirkung in Bezug auf die Vernetzung der Alkoxysilylgruppen haben können.

Als Katalysatoren für die Vernetzung bzw. Härtung sowie die chemische Fixierung der Urethangruppen tragenden Alkoxysilylpräpolymere auf Partikel- und makroskopischen Oberfläche können die bekannten Polyurethanisierungs-, Allophanatisierungs- oder Biuretisierungskatalysatoren verwendet werden, die dem Fachmann an sich bekannt sind, bzw. die literaturbekannten und üblicherweise zur Hydrolyse und Kondensation von Alkoxysilanen eingesetzten Katalysatoren. Hierzu zählen Verbindungen, wie beispielsweise die Zinksalze Zinkoctoat, Zinkacetylacetonat und Zink-(II)-ethylcaproat, oder Tetraalkylammoniumverbindungen, wie N,N,N-Trimethyl-N-2-hydroxypropylammoniumhydroxid, N,N,N-Trimethyl-N-2-hydroxypropylammonium-2-ethylhexanoat oder Cholin-2-ethylhexanoat verwendet werden. Bevorzugt ist die Verwendung von Zinkoctoat (Zink-(II)-ethylhexanoat) und der Tetraalkylammoniumverbindungen, besonders bevorzugt diejenige von Zinkoctoat. Weiterhin können als Katalysatoren die üblicherweise verwendeten organischen Zinnverbindungen, wie z.B. Dibutylzinndilaurat, Dioctylzinndilaurat, Dibutylzinndi-acetylacetonat, Dibutylzinndiacetat oder Dibutylzinndioctoat etc., verwendet werden. Des Weiteren können auch Wismutkatalysatoren, z.B. der Borchi-Katalysator, Titanverbindungen, z.B. Titan(IV)isopropylat oder Titanylacetylacetonat, Eisen(III)-Verbindungen, z.B. Eisen(III)acetylacetonat, Aluminiumverbindungen, wie Aluminiumtriisopropylat, Aluminiumtri-sec-butylat und andere Alkoholate sowie Aluminiumacetylacetonat, Calciumverbindungen, wie Calciumdinatriumethylen-diamintetraacetat oder Caliumdiacetylacetonat, oder auch Amine, z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenylamin, N-Ethylmorpholin etc., eingesetzt werden. Auch organische oder anorganische Brönstedtsäuren wie Essigsäure, Trifluoressigsäure, Methansulfonsäure, p-Toluolsulfonsäure oder Benzoylchlorid, Salzsäure, Phosphorsäure deren Mono- und/oder Diester, wie z.B. Butylphosphat, (Iso-)Propylphosphat, Dibutylphosphat etc., sind als Katalysatoren geeignet. Selbstverständlich können auch Kombinationen mehrerer Katalysatoren eingesetzt werden.

Die erfindungsgemäßen Modifizierungsmittel und Zusammensetzungen können auch sogenannte photolatente Basen als Katalysatoren enthalten, wie sie in der WO 2005/100482 beschrieben sind. Unter photolatenten Basen sind vorzugsweise organische Basen mit einem oder mehreren basischen Stickstoffatomen zu verstehen, die zunächst in einer blockierten Form vorliegen und erst nach Bestrahlung mit UV-Licht, sichtbarem Licht oder IR-Strahlung durch Spaltung des Moleküls die basische Form freisetzen.

Der Katalysator bzw. die photolatente Base wird in Mengen von 0,001 bis 10,0 Gew.-%, bevorzugt 0,01 bis 1,0 Gew.-% und besonders bevorzugt 0,05 bis 0,5 Gew.-% bezogen auf die Modifizierungsmittel eingesetzt. Der Katalysator bzw. die photolatente Base kann in einer Portion oder aber auch portionsweise oder auch kontinuierlich zugegeben werden. Bevorzugt ist Zugabe der gesamten Menge in einer Portion.

Des Weiteren können die erfindungsgemäßen Kleb- und Dichtstoffe, Binde- und Modifizierungsmittel andere reaktive Silane, vorzugsweise Alkoxysilane enthalten.

Diese Alkoxysilane können sowohl monomere Silane wie die der Formel (4) als auch polymergebundene Silane sein,

UₓSiV₍₄₋ₓ₎ Formel (4)

wobei U gleiche oder verschiedene, in Anwesenheit von Wasser und katalytischer Mengen Brönstedt-Säure bei Temperaturen bis 100°C nicht hydrolysierbare Gruppen V = gleiche oder verschiedene in Anwesenheit von Wasser und katalytischer Mengen Brönstedt-Säure bei Temperaturen bis 100°C hydrolysierbare Gruppen oder Hydroxygruppen und x = 1, 2, 3 oder 4 darstellen.

Hydrolysierbar bedeutet im Rahmen dieser Erfindung, dass mindestens 80 % der Gruppen unter den gewählten Bedingungen hydrolysiert und damit abgespalten werden können.

Die Alkylkette kann 0 bis 50, vorzugsweise 0 bis 22 Kohlenstoffatome aufweisen und auch durch Heteroatome wie Sauerstoff oder Stickstoff oder Schwefel unterbrochen sein oder auch ein Siliconrest sein. Der aromatische Rest kann auch heteroaromatisch sein. Die Reste A und B können ggf. einen oder mehrere übliche Substituenten, wie beispielsweise Halogen oder Alkoxy aufweisen.

Nicht hydrolysierbare Reste U nach der Formel (4) mit funktionellen Gruppen können ausgewählt werden aus Glycidyl- oder Glycidyloxyalkylen-Reste, wie beispielsweise β-Glycidyloxyethyl, γ-Glycidyloxypropyl, δ-Glycidyloxypropyl, ε-Glycidyloxypentyl, ω-Glycidyloxyhexyl oder 2-(3,4-Epoxycyclohexyl)ethyl, der Methacryloxyalkylen- und Acryloxyalkylen-Reste, wie beispielsweise Methacryloxymethyl, Acryloxymethyl, Methacryloxyethyl, Acryloxyethyl, Methacryloxypropyl, Acryloxypropyl, Methacryloxybutyl oder Acryloxybutyl, und dem 3-Isocyanatopropyl-Rest, und cyclische und lineare (poly)urethangruppen-haltige und harnstoffhaltige und (poly)aminogruppenhaltiger Rest.

Besonders verbreitet ist der Einsatz von niedrig viskosen, monomeren Trimethoxysilyl- und Triethoxysilylgruppen tragenden Verbindungen, die in Gegenwart von Luftfeuchtigkeit und geeigneten Katalysatoren zumeist schon bei Raumtemperatur in der Lage sind, unter Abspaltung der Alkoxygruppen und Ausbildung von Si-O-Si-Bindungen miteinander zu kondensieren. Solche organofunktionellen monomeren Silane sind zum Beispiel N-Cyclohexylamino-methyltrimethoxysilan, N-Cyclohexyl-3-aminopropyltriethoxysilan, 3-Aminopropyltri-methoxysilan, Vinyltrimethoxysilan, Vinyltriethoxysilan, Vinyldimethoxymethylsilan, 3-Isocyanatopropyltrimethoxysilan, 3-Glycidyloxypropyltrimethoxysilan, 3-Glycidyloxypropyltriethoxysilan, 3-Methacryloxypropyltrimethoxysilan, Methyltrimethoxysilan, Methyltriethoxysilan, Dimethyldimethoxysilan, Phenyltriethoxysilan und Hexadecyltrimethoxysilan. Dem Fachmann ist die Methodik im Wesentlichen bekannt.

Die Urethangruppen aufweisenden silylierten Polymere lassen sich ebenfalls in Mischungen mit allen silylfunktionellen Verbindungen, die mindestens eine chemisch an ein Polymergerüst gebundene Alkoxysilylgruppe aufweisen, einsetzen.

Derartige Silan-modifizierte Polymere sind Silanverbindungen des Typs der Formel (5) 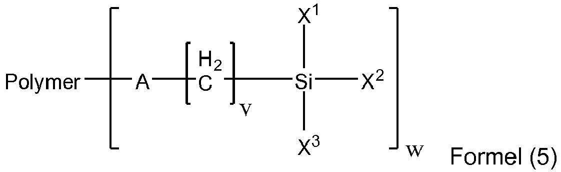 wobei
- X¹, X² und X³: unabhängig voneinander Alkyl- oder Alkoxyreste mit 1-8 C-Atomen sind,
- A: einen Carboxy-, Carbamat-, Amid-, Carbonat-, Ureido- oder Sulfonatgruppe enthaltenden Rest darstellt oder ein Sauerstoffatom bedeutet,
- w: eine ganze Zahl von 1 bis 8 ist und
- v: eine ganze Zahl von 1 bis 20, bevorzugt 1 bis 15 und insbesondere 1 bis 5 ist.

Der Polymerrest ist ausgewählt aus einer Gruppe bestehend aus Alkydharzen, ölmodifizierten Alkydharzen, gesättigten oder ungesättigten Polyestern, natürlichen Ölen, Epoxiden, Polyamiden, Polycarbonaten, Polyethylenen, Polypropylenen, Polybutylenen, Polystyrolen, Ethylen-Propylen-Copolymeren, (Meth)acrylaten, (Meth)acrylamiden und deren Salzen, Phenolharzen, Polyoxymethylen-Homo- und - Copolymeren, Polyurethanen, Polysulfonen, Polysulfidkautschuken, Nitrocellulosen, Vinylbutyraten, Vinylpolymeren, Ethylcellulosen, Celluloseacetaten und -butyraten, Reyon, Schellack, Wachsen, Ethylencopolymeren, organischen Kautschuken, Polysiloxanen, Polyethersiloxanen, Siliconharzen, Polyethern, Polyetherestern und/oder Polyethercarbonaten.

Zu den bevorzugt in Mischungen mit den Urethangruppen aufweisenden Silylpolymeren eingesetzten Polymeren der Formel (5) zählen sogenannte α-Silan-terminierte Polymere, deren reaktive Alkoxysilylgruppen nur durch eine Methyleneinheit (v = 1) von einer Stickstoff-haltigen Polymer-gebundenen Gruppe A getrennt ist, wie in WO 2005/100482 und EP-A1-1 967 550 beschrieben.

Weitere erfindungsgemäß in härtbaren Zusammensetzungen einsetzbare Silanpolymere der Formel (5) sind solche, in denen die Silangruppen terminal über eine Propyleneinheit (v = 3) an ein Polymergerüst gebunden ist und bei denen A eine Urethangruppe darstellt. Bevorzugt sind dabei Polyalkylenoxide, speziell Polypropylenglykole (w = 2), mit Silanfunktionen an jedem der beiden Kettenden, wie in EP-A1-1 824 904 beschrieben.

Ebenso als Mischungsbestandteile geeignete Verbindungen der Formel (5) sind Silan-terminierte Polyurethane, deren Herstellung aus einem Polyol durch Umsetzung mit einem Diisocyanat und anschließend mit einem aminofunktionellen Alkoxysilan z.B. in US 7,365,145, US 3,627,722 oder US 3,632,557 beschrieben wird. Die Bindegruppe A ist dabei ein Urethan- und Harnstoffgruppen tragender Rest.

Weitere im Sinne der Erfindung einsetzbare Polymere sind Urethan- und Harnstoff-freie silylterminierte Polyether der Formel (5) mit A gleich Sauerstoff, in denen die terminalen Alkoxysilylgruppen über eine Etherfunktion direkt an das Polymergerüst angebunden sind. Derartige Silylpolymere sind in US 3,971,751 beschrieben. Sie bestehen bevorzugt aus einem Polyethergrundgerüst, wobei v in Formel (5) bevorzugt den Wert 3 und w bevorzugt den Wert 2 hat, und sind als MS Polyme^{©}-Produkte von Kaneka erhältlich.

Auch Alkoxysilylgruppen tragende Polysiloxane wie z.B. in WO 2007/061847 beschrieben, sind mit den erfindungsgemäßen urethanisierten und silylierten Polymeren kombinierbar.

Gegenstand der Erfindung ist die Verwendung der härtbaren Massen, enthaltend die Urethangruppen aufweisenden Alkoxysilylpräpolymere und gegebenenfalls mindestes eine weitere Alkoxysilankomponente gemäß Formel (4) oder (5), als Klebstoffe, Dichtstoffe, Bindemittel oder Modifizierungsmittel.

Darüber hinaus können die härtbaren Mischungen eine oder mehrere Isocyanat-, Hydroxyl- und/oder Aminverbindungen enthalten.

Es ist generell dem Experten überlassen, die für das erwünschte Eigenschaftsprofil geeigneten Komponenten auszuwählen, um optimiert angepasste Copolymersysteme zu erzeugen. Es steht mithin durch die erfindungsgemäßen Zusammensetzungen ein Baukasten unterschiedlicher Eigenschaftsprofile zur Verfügung, aus dem sich anwendungsgerecht eine optimierte Zusammenstellung auswählen lässt.

Das erfindungsgemäße Einbringen von Urethangruppen in die Präpolymerstruktur gestattet es, die von den reinen Polyurethanen bekannten guten Haftungseigenschaften auf diversen Untergründen, die hohe Beständigkeit gegenüber Lösemitteln, Chemikalien und Witterungseinflüssen sowie ihre hohe mechanische Flexibilität mit den Vorzügen härtbarer Silylpolyether zu kombinieren.

Überraschenderweise sind hier selbst mit beachtlicher Alkoxysilyl-Funktionalisierungsdichte ausgestattete urethanisierte Silylpolyether-Isocyanat-Addukte zumeist niedrigviskose, gut handhabbare Flüssigkeiten, so dass auch im Falle angestrebter hochvernetzter, gut haftender Klebeverbindungen keinerlei Einschränkungen im Hinblick auf die Dosierung dieser Komponente zu verzeichnen sind. Diese Beobachtung differenziert die erfindungsgemäße Lehre von der in der WO 2008/058955 dargelegten Vorgehensweise, die auf das Einbringen freier Silanmonomerer als Formulierungsbestandteile in den Endrezepturen abstellt, um zu gewährleisten, dass die notwendige Vernetzungsdichte bei gleichzeitig niedriger Verarbeitungsviskosität erzielt wird. Die im Hinblick auf ihre strukturelle Vielfalt kaum einzugrenzenden Alkoxysilylgruppen aufweisenden Präpolymere eröffnen dem in der Polymerchemie vertrauten Fachmann durch den Einbau z.B. von Ester-, Carbonat- und aromatischen Strukturelementen bereits eine Gestaltungsfreiheit, die nahezu beliebige anwendungstechnische Bedürfnisse adressiert.

Die nach dem erfindungsgemäßen Verfahren gewonnenen härtbaren Massen und Präpolymere sowie die sie enthaltenden Zusammensetzungen eignen sich als Grundstoffe für die Herstellung einer Vielzahl von gewerblich anwendbaren Produkten.

Ein weiterer Gegenstand der Erfindung ist daher auch die Verwendung der urethangruppenhaltigen härtbare Zusammensetzungen zur Herstellung von oder als, beispielsweise Klebstoffen, Dichtstoffen, Dichtungsmassen, Bindemitteln, Oberflächenbeschichtungsmitteln, reaktiven Vernetzern, Haftvermittlern, Hydrophobierungsmitteln, Netzmitteln, Primern und /oder Oberflächenmodifizierungsmitteln, Bautenhydrophobierungsmitteln, Additiven in Lack- oder Nagellackformulierungen.

Die härtbaren Massen sind für verschiedenste makroskopische oder mikroskopische Substrate geeignet, beispielsweise ausgewählt aus der Gruppe der Metalle und Metalloxide, Glas und Glasfasern/Glasgewebe, Holz, Holzwerkstoffen, Naturfasern, sowie beispielsweise auch Kork und generell silikatischen Materialien, Beton, Mörtel, Gips, Mauerwerk, und Partikel, oxidische Partikel, pyrogene Kieselsäure, Fällungskieselsäuren, Quarzpartikel und weitere anorganische Oxidpartikel, Glaspartikel, Titandioxid, Aluminiumoxid, Zirkondioxid, Cerdioxid, Eisenoxide, Kupferoxide, Kaolin, Wollastonit, Talkum, Glimmer, Feldspäten, Hydroxide, Aluminiumtrihydroxid, Magnesiumdihydroxid, Böhmit, Hydrotalcit und hydroxydische Eisenpigmente, FeO(OH), Carbonate, Calciumcarbonat und Dolomit, Eisen, Kupfer, Zink, Nickel, Aluminium, Magnesium, Metalllegierungen und kohlenstoffhaltige Materialien, Graphit und Ruß, organische partikuläre Substrate, Siliconharze, organomodifizierte Silicone, organische Polymere und Biopolymere, Leder, Tissue, Papier und/oder deren Gemische.

So erweist sich der gezielte Einbau der sich über hydrolytische Prozesse an Mauerwerk, Beton, Mörtel, usw. verankernden Alkoxysilylgruppierungen als äußert vorteilhaft bei Einsatz derartig ausgerüsteter Systeme im Bereich der Bauwirtschaft, wo es um die verbindende und isolierende Abdichtung von z.B. Zargen für Fenstern und Türen in Rohbauten geht.

Die erfindungsgemäßen härtbaren Massen und auch die sie enthaltenden Zusammensetzungen können in Form von Lösungen oder auch Emulsionen oder Suspensionen oder Schäumen eingesetzt werden.

Das Lösungsmittel oder Suspensions/Emulsionsmittel kann je nach Anwendung ausgewählt werden. Neben Wasser kommen aromatische und nicht-aromatische Lösungsmittel, auch Alkohole, Kohlenwasserstoffe, etc. in Frage.

Im Rahmen zunehmenden Umweltbewusstseins ist die Zugabe von organischen Lösemitteln zur Erniedrigung der Viskosität von Formulierungen zur Modifizierung von Oberflächen in den letzten Jahren jedoch zunehmend in die Kritik geraten. Als Alternative bietet es sich an, die Urethangruppen aufweisenden Silylverbindungen in der Form einer wässrigen Emulsion zu applizieren.

Eine weitere Verwendung der Alkoxysilylgruppen tragenden urethanisierten härtbaren Massen sind wässerige Emulsionen, hergestellt nach dem in der DE 10 2009 022630.3 offenbarten Verfahren. Trotz der vermuteten und strukturell bedingten Hydrolyseempfindlichkeit der reaktiven Präpolymere wurde jetzt überraschenderweise gefunden dass diese in stabile Emulsionen überführt werden können. Eine Emulsion wird als stabil bezeichnet wenn die Emulsion bevorzugt nach einem Monat Lagerung bei Raumtemperatur, mindestens aber nach einer Woche Lagerung bei Raumtemperatur keine mit dem Auge sichtbaren Anzeichen des Brechens zeigt. Das Brechen einer Emulsion ist hier definiert als die Separation in eine makroskopische Öl- beziehungsweise Wasserphase. Eine Emulsion wird als hydrolysestabil bezeichnet, wenn nach einem Monat Lagerung bei Raumtemperatur, mindestens aber nach einer Woche Lagerung bei Raumtemperatur der Gehalt an freiem Alkohol in der Emulsion einer Spaltung von maximal 10 Gew.-% der emulgierten Alkoxysilylgruppen entspricht.

Der optimale Massenanteil Wasser beziehungsweise Polymer ist abhängig von der Anwendung. Es bleibt dem Fachmann überlassen, für einen bestimmten Anwendungsbereich den optimalen Massenanteil des reaktiven Polymers zu finden. Dem Fachmann ist es allerdings geläufig, dass der bevorzugte Anteil an Wasser in solchen Emulsionen zwischen 10 Gew.-% bis 97 Gew.-%, besonders bevorzugt zwischen 20 Gew.-% und 90 Gew.-% und insbesondere größer als 30 Gew.-% liegt.

Als Emulgatoren für solche Emulsionen kommen prinzipiell sämtliche anionischen, nicht-ionischen, kationischen und amphoteren Emulgatoren sowie Emulgatormischungen in Betracht. Bevorzugte Beispiele von solchen Emulgatoren sind Alkoholethoxylate, Fettsäureethoxylate, ethoxylierte Ester, und (ethoxylierte) Sorbitanester.

Die wässrige Phase der Emulsionen kann hydrophile, anorganische Füllstoffe zur Modifizierung der mechanischen Eigenschaften der erfindungsgemäßen Beschichtungen enthalten mit der Maßgabe, dass diese hydrophilen Füllstoffe nachträglich zu der bereits stabilisierten Emulsion zugegeben werden. Vorteilhaft kann es sein, wenn die Oberfläche der eingesetzten Füllstoffe mindestens eine funktionelle Gruppe aufweist, so dass es nach Eintrocknen beziehungsweise Brechen der Emulsion zu chemischen Reaktionen zwischen reaktiven funktionellen Gruppen der Urethangruppen enthaltenden Silylverbindungen mit denen auf der Füllstoffoberfläche kommt. Beispiele solcher Füllstoffe sind pyrogene und gefällte Kieselsäure, anorganische Oxide wie Aluminiumoxid, Titandioxid und Zirkondioxid, Glas und Quarz, Hydroxide wie Aluminium- und Magnesiumhydroxid, Silicate wie Wollastonit, Glimmer, Kaolin und Talk, Calciumcarbonat und andere Carbonate, Metalle wie Kupfer, Zink und Nickel und Metalllegierungen sowie Graphit und Ruß.

Des Weiteren kann die Emulsion niedrigmolekulare, organofunktionelle und wasserunlösliche Silane enthalten, wie vorher beschrieben. Die Emulsion kann ebenfalls Katalysatoren zur Fixierung der Urethangruppen enthaltenden Silylverbindungen auf eine Oberfläche enthalten.

Ebenso können den Emulsionen weitere funktionelle Stoffe zugesetzt werden. Dazu zählen beispielsweise rheologische Additive, Entschäumer, Entlüfter, filmbildende Polymere, antimikrobielle und konservierende Stoffe, Antioxidantien, Farbstoffe, Färbemittel und Pigmente, Frostschutzmittel, Fungizide, Haftvermittler und/oder Reaktivverdünner sowie Weichmacher und Komplexbildner. Auch Sprühhilfsmittel, Netzmittel, Vitamine, Wuchsstoffe, Hormone, Duftstoffe, Lichtschutzmittel, Radikalfänger, UV-Absorber sowie weitere Stabilisatoren können den Mischungen zugesetzt werden.

Ein weiterer Gegenstand der Erfindung ist die Verwendung von Emulsionen und/oder Suspensionen enthaltend die erfindungsgemäßen härtbaren Massen wobei die Emulsionen und/oder Suspensionen Verbindungen ausgewählt beispielsweise aus den Gruppen der Katalysatoren, photolatente Basen, Additive zur Modifizierung der rheologischen Eigenschaften, hydrophile Füllstoffe, organofunktionelle und teillösliche und wasserunlösliche Silane und Siloxane, Hilfsstoffe, filmbildende Stoffe, antimikrobielle und konservierende Stoffe, Dispergiermittel, Entschäumer und Entlüfter, Farbstoffe, Färbemittel und Pigmente, Frostschutzmittel Fungizide, Haftvermittler und/oder Reaktivverdünner, Weichmacher und Komplexbildner, Sprühhilfsmittel, Netzmittel, Vitamine, Wuchsstoffe, Hormone und/oder Duftstoffe, Lichtschutzmittel, Radikalfänger, UV-Absorber und/oder Stabilisatoren, enthalten.

Ein weiterer Gegenstand der Erfindung ist die Verwendung der härtbaren Massen und/oder der Emulsionen und/oder Suspensionen als Rohstoffe für Lacke, Tinten, Trennmittel, Klebstoffe, kosmetische Produkte, kratzfeste Beschichtungen, Bautenschutzmittel, Korrosionsschutzmittel und/oder Dichtungsmassen, zur Beschichtung von Papier, Partikeln, Textil- und Glasfasern, zur Beschichtung von Füllstoffen für Papier, zur Erzeugung von Antistatikoberflächen und/oder als Ausgangsmaterial für die Herstellung von Gummiteilen auf der Basis von Polypropylenoxid.

Die erfindungsgemäßen härtbaren Massen können als Bindemittel, das heißt, zur Verbindung von gleichartigen oder verschiedenartigen Stoffen miteinander, eingesetzt werden. Bei den miteinander zur verbindenden bzw. zu verklebenden Stoffen kann es sich z.B. um Glas, Metalle, Kunststoffe, Holz oder Baustoffe wie Beton, Klinker, Keramik, Stein handeln.

Bei der Herstellung von Holzwerkstoffen, wie beispielsweise Spanplatten, OSB- oder MDF-Platten, dienen sie der Verklebung der Holz- oder Korkpartikel (auch Holzspänen oder Holzfasern) und stehen so auch für Fußböden, Parkett und Laminatanwendungen als Ersatz zu Aminoplasten oder Isocyanat-Klebezusammensetzungen zur Verfügung.

Die erfindungsgemäßen härtbaren Massen können auch thermoplastische Eigenschaften besitzen und damit auch zur Herstellung von Formteilen dienen, bei denen ein temperaturabhängiges Fließverhalten notwendig ist. Die Formmassen können in Verfahren wie beispielsweise Spritzgießen, Extrudieren oder Warmpressen verwendet werden. Die erfindungsgemäßen Polymere können bevorzugt ohne Katalysatoren eingesetzt werden, so dass eine weitere Vernetzung und Härtung während des Formgebungsprozesses unterbleibt. Nach der Vernetzung gehen die Silyl- und ggfs. NCO-Gruppen tragenden Polymere in duroplastische Produkte über.

Die erfindungsgemäßen härtbaren Massen finden ebenfalls Anwendung im Bereich Polyurethane. Je nachdem, ob sie terminale Hydroxyl- oder Isocyanatgruppen aufweisen, können sie in dem Fachmann bekannten Polyurethansystemen die Funktion als Polyol- und/oder Isocyanatkomponente übernehmen. In solchen Systemen werden die mit feuchtigkeitsvernetzenden Alkoxysilylgruppen ausgestatteten Präpolymere bevorzugt im Gemisch mit anderen konventionellen Polyolen bzw. Isocyanatverbindungen eingesetzt. Die Verwendung solcher Alkoxysilylgruppen tragender Komponenten in PU-Systemen ermöglicht die reaktive Anbindung der hergestellten Polyurethane und Polyurethanschäume auf diverse Substratoberflächen.

Ein Gegenstand der Erfindung sind daher härtbare Massen, hergestellt durch eine Umsetzung von mindestens einem Silylverbindungen 1 mit mindestens einer Isocyanat-Verbindung als Bestandteil von Zusammensetzungen verwendbar als Kleb-, Binde- und/oder Beschichtungsmittel, u.a. als Komponente in Polyurethansystemen.

Die zu beschichtenden Oberflächen können durch bekannte Verfahren wie Sprühen, Streichen, Tauchen, etc. beschichtet werden. Die zu verklebenden Oberflächen werden bei dem Verfahren vorzugsweise aufeinandergepresst. Das Aufbringen der gegebenenfalls schäumbaren Mischung (Zusammensetzungen) zur Herstellung der Verklebung erfolgt vorzugsweise aus einer Druckdose, wobei die Schaumbildung durch das in der Mischung enthaltene, gegebenenfalls auch durch chemische Reaktion freigesetzte, Treibmittel erfolgt.

Beim Zusammendrücken der zu verklebenden Oberflächen wird die Schaumstruktur des Schaumes vorzugsweise zumindest weitgehend zerstört. Dementsprechend besteht der Schaum, wenn er zwischen zu verklebenden Flächen zerdrückt worden ist, vorzugsweise zu weniger als 60 % seines Volumens, besonders bevorzugt zu weniger als 40 % seines Volumens und insbesondere bevorzugt zu weniger als 20 % seines Volumens aus Gasblasen.

Bei einer bevorzugten Ausführungsform wird wenigstens eine der zu verbindenden Oberflächen vor der erfindungsgemäßen Anwendung des Schaums angefeuchtet. Ganz besonders bevorzugt wird eine der zu verbindenden Oberflächen angefeuchtet, während der Schaum auf der jeweils anderen Oberfläche appliziert wird. Anschließend wird der Schaum zwischen beiden Oberflächen zerdrückt.

Die hohe Anfangsfestigkeit des Schaumes ist dabei auf ein auch den Fachmann überraschendes Phänomen zurückzuführen. So baut sich die Klebkraft des Schaumes - anders als bei konventionellen silanvernetzenden Klebstoffen - nicht nur durch die chemische Silanvernetzung auf. Stattdessen zeigt sich hier neben diesem chemischen Härtungsprozess zusätzlich noch ein bemerkenswerter physikalischer Effekt, wie er ansonsten nur von Kontaktklebstoffen bekannt ist, bei denen der Festigkeitsaufbau nur durch die Verdampfung zugesetzter Lösungsmittel erfolgt. Beim Schaum wird die Funktion dieser Lösungsmittel durch das Treibmittel bzw. die Treibmittelmischung übernommen. Anders als bei den nur sehr langsam härtenden Kontaktklebern verdampfen die Treibmittel jedoch nicht gemächlich sondern zu großen Teilen schlagartig bereits beim Verschäumen der schäumbaren Mischung. Dabei schäumen sie diese zum Schaum auf, wobei der Schaum trotz einer nach dem Verdampfen des Treibmittels sehr hohen Viskosität überraschenderweise äußerst beweglich bleibt, so dass sich der Schaum durch das Aufeinanderpressen der zu verklebenden Oberflächen problemlos zerdrücken lässt. Beim Zerdrücken des Schaums entsteht zwischen den zu verklebenden Oberflächen eine gleichmäßige und dünne Klebstoffschicht, und die Oberflächen werden gut benetzt, so dass eine optimale Klebewirkung erreicht werden kann. Diese wird anschließend durch die ablaufenden chemischen Härtungsreaktionen weiter verstärkt.

Somit ist ein weiterer Gegenstand der Erfindung ein Verfahren zum Verkleben von Oberflächen, bei dem eine schäumbare härtbare Masse bereitgestellt wird, die zwischen den zu verklebenden Oberflächen zu einem Schaum verschäumt wird, oder aber der aus der Mischung herstellbare Schaum nach der Verschäumung auf einer der zu verklebenden Oberflächen oder zwischen den zu verklebenden Oberflächen aufgebracht wird, und der Schaum anschließend zwischen den zu verklebenden Oberflächen zerdrückt wird.

Ein weiterer Gegenstand der Erfindung ist ein Verfahren zum Verbinden von Oberflächen, bei dem die härtbare Masse auf zumindest einer der zu verbindenden Oberflächen oder zwischen den zu verbindenden Oberflächen aufgebracht wird und anschließend unter Aushärten verklebt wird.

Ein weiterer Gegenstand der Erfindung ist ein analoges Verfahren zum Dichten oder Überbrücken oder Verfüllen von Oberflächen, Rissen oder Spalten, bei dem eine härtbare Masse zwischen die zu dichtenden Oberflächen aufgebracht wird und anschließend unter Gewährleistung der Dichtigkeit aushärtet.

Bei beiden analogen Verfahren kann die härtbare Masse in Form eines Schaums appliziert werden.

Sollen diese erfindungsgemäßen Zusammensetzungen schäumbar sein, enthalten diese ein oder mehrere, gegebenenfalls chemisch und/oder physikalisch gebildete Treibmittel.

Ein weiterer Gegenstand der Erfindung sind daher auch die härtbare Massen, die ein oder mehrere, gegebenenfalls chemisch und/oder physikalisch gebildete Treibmittel enthalten und die damit hergestellten Schäume.

Ein weiterer Gegenstand ist ein Verfahren zum Verbinden von Oberflächen bei dem die härtbare Masse in Form eines Schaums appliziert wird.

Begünstigt wird die hohe anfängliche Klebkraft des Schaumes durch eine möglichst hohe Schaumdichte. Somit können schäumbare Zusammensetzung hergestellt werden, die
(A) die urethanisierten Silylgruppen tragenden Präpolymere und
(B) unter 15 Gew.-% Treibmittel, bezogen auf die gesamte Mischung enthalten.

Bevorzugt enthält die Mischung weniger als 15 Gew.-% Treibmittel, bezogen auf die gesamte Mischung.

Als Treibmittel sind bereits bei relativ geringen Drücken kondensierbare Gase geeignet, die auch zur Herstellung sprühbarer Montageschäume verwendet werden können. Gängige Treibmittel sind beispielsweise Kohlenwasserstoffe mit jeweils 1 bis 5, insbesondere 3 bis 5 Kohlenstoffatomen, insbesondere Propan-Butan-Mischungen oder Isobutan, Fluorkohlenwasserstoffe mit 1-5 Kohlenstoffatomen, z.B. 1,1,1,2-Tetrafluorethan oder 1,1-Difluorethan, oder Dimethylether sowie entsprechende Mischungen. Der Treibmittelgehalt liegt vorzugsweise bei < 10 Gew.-%, besonders bevorzugt bei < 7 bzw. < 5 Gew.-% bezogen auf die gesamte Mischung.

Bevorzugt liegt der Gehalt der Treibmittel bezogen auf die gesamte Mischung bei maximal 10 Gew.-% besonders bevorzugt bei maximal 7 Gew.-%.

Die Schaumbildung kann auch ohne Zugabe eines Treibmittels auf rein chemischer Basis erfolgen, hier allerdings bevorzugt im Fall einer Warm- oder Heißhärtung. Hierbei wird bei Erwärmung der Klebemischung ein niedrigflüchtiges Treibmittel gebildet, das beispielsweise Alkohole wie Methanol, Ethanol umfasst, die aus der Hydrolyse der Alkoxysilylgruppe entstanden sind. Auch kann Wasser oder ein inertes Lösungsmittel bei erhöhter Temperatur als Treibmittel dienen.

Wird eine Beschichtung eines Substrats erwünscht, so kann auch auf das Treibmittel verzichtet werden, und gegebenenfalls durch Zugabe von Lösungsmitteln oder weiteren Additiven und Hilfsstoffen, die für Beschichtungen erforderlichen Materialeigenschaften gezielt eingestellt werden.

Die reaktiven urethanisierten und silanfunktionellen härtbaren Massen eignen sich auch hervorragend zur Modifizierung von flächigen und/oder Partikeloberflächen.

Unter Modifizierung wird hierbei die chemische oder physikalische Anbindung eines Modifizierungsmittels an die jeweilige feste Oberfläche verstanden. Die Modifizierung kann dabei bezogen auf die feste Oberfläche wahlweise partiell oder vollständig sein, wobei die Feststoffoberfläche mit einer geschlossenen Monoschicht oder auch mit einer Multischicht belegt sein kann. Eine Modifizierung im Sinne dieser Definition schließt auch Oberflächenbeschichtungen mit ein, welche in der Regel vollflächig sind, wie z.B. bei Lacken, Farben und/oder beispielsweise Hydrophobierungsmitteln.

Modifizierungen von Flächen oder Partikeln zur Modifikation von Oberflächen werden aus vielfältigen Gründen und nach unterschiedlichsten Verfahren durchgeführt und sind dem Fachmann aus der Literatur bekannt. Modifizierungen dienen im Allgemeinen dazu, die chemischen und physikalischen Eigenschaften von Oberflächen eines Trägermaterials durch Aufbringen einer meist dünnen Schicht eines Modifizierungsmittels zielgerichtet auf den jeweils gewünschten Anwendungszweck anzupassen. Zum Beispiel erfüllen Modifizierungsmittel wichtige Funktionen als Haftvermittler, Primer, Lacke, Hydrophobierungsmittel, oder Netzmittel. Allen Varianten der Beschichtungen gemeinsam ist die Aufbringung einer möglichst gut auf dem jeweiligen Untergrund haftenden Schicht durch Auftragen eines oftmals flüssigen oder pulverförmigen, leicht zu applizierenden Modifizierungsmittels. Sichergestellt ist hiermit keinesfalls der zielgerichtete Einbau von Silylankergruppen an den Stellen des Polymers, die deren positiver Wirkung bedürfen.

Je nach Art der zu modifizierenden Oberfläche, der chemisch-physikalischen Natur des jeweiligen Modifizierungsmittels und dem anwendungstechnischen Ziel der angestrebten Oberflächenmodifizierung kommen ganz unterschiedliche Verfahren der Schichtaufbringung zur Anwendung. Neben zum Beispiel thermischen und elektrochemischen Verfahren spielen insbesondere chemische Modifizierungsverfahren eine herausragende Rolle.

Die gute Haftung auf verschiedensten Substraten gründet sich auf der hohen Silanankergruppendichte, evtl. unterstützt durch hinzukommendende Reaktionen von NCO-Funktionen des Präpolymeren mit reaktiven Gruppen auf der Substratoberfläche, in Kombination mit starken physikalischen Wechselwirkungen der Urethangruppen mit polaren chemischen Gruppen wie OH-Gruppen auf der jeweiligen Substratoberfläche. Das Fehlen weiterer Silylgruppen in den Strukturen der DE 10 2004 018548 innerhalb der Basispolymerkette, z.B. als Seitengruppen, begrenzt die Vernetzungsdichte sowie die Haftung nach der Aushärtung.

Deren Vernetzung zu festen Endprodukten oder deren chemische/physikalische Anbindung auf reaktive Oberflächen, z.B. auf Partikeloberflächen, erfolgt auf einfache Weise wahlweise unter Zusatz von Wasser, Säure oder Base oder Metallverbindungen als Beschleuniger, wobei durch Erhöhung der Temperatur während des Härtungsvorgangs die Härtungszeit gesteuert werden kann. Die Oberflächen können mikroskopisch, beispielsweise in Form von Partikeln oder Partikelagglomeraten, und/oder makroskopisch in Form von Flächengebilden oder Fasern oder ähnlichen dreidimensionalen Körpern ausgebildet sein.

Partikeloberflächen solider oder auch poröser Partikel können erfindungsgemäß mit aus dem Stand der Technik bekannten Methoden oberflächenbeschichtet werden. Dazu gehört das Aufdüsen der urethanisierten Silylverbindungen auf die Partikel unter Vermischung, Verknetung und/oder Erwärmen gegebenenfalls in Gegenwart geeigneter Vernetzungskatalysatoren. Ebenso können die erfindungsgemäßen Modifizierungsmittel rein oder aus geeigneten organischen und/oder anorganischen Lösemitteln auf die Partikeloberflächen aufgebracht werden, wo sie dann unter kovalenter Anbindung ausreagieren können. Ebenso ist es möglich, Emulsionen aus den erfindungsgemäßen Modifizierungsmitteln in geeigneten Medien, ggf. unter Zusatz von Hilfsstoffen, weiterer Modifizierungsmittel und Emulgatoren und/oder Netzmitteln, auf die Partikeloberflächen aufzubringen. Auch die Modifizierung von Partikeloberflächen in einer Matrix (vor-)dispergierter Partikel, beispielsweise von in einem Polymer oder einem Lack (vor-)dispergierten partikulären Füllstoffs oder funktionellen Partikeln, ist durch Zugabe der Modifizierungsmittel zu den entsprechenden Systemen unter Durchmischung möglich, ggf. unter Erwärmung und/oder der Zugabe eines geeigneten Katalysators. In jedem Fall können den urethangruppen-haltigen Silylverbindungen noch weitere Komponenten, wie beispielsweise monomere, oligomere oder polymere Silane oder reaktive Gruppen tragende andere Komponenten sowie nach einem anderen Mechanismus aushärtende oder aufziehende Materialien, wie beispielsweise Acrylate, Epoxide, Isocyanate, Carboxylate, Hydroxide, Lactone, Lactame u. a. m, beigemischt sein. Auch können mehrere der urethangruppen-haltigen Silylverbindungen miteinander gemischt verwendet werden.

Die zu modifizierenden Oberflächen können mikroskopisch oder makroskopischer Natur und somit aus einzelnen oder aggregierten Partikeln bestehen.

Die zu modifizierenden Substrate oder Partikel können unterschiedlicher Herkunft, unterschiedlicher Größe bzw. Partikelgrößenverteilung sowie unterschiedlicher Morphologie (sphärisch, plättchenförmig (mit unterschiedlichen Aspektverhältnissen) sein und faserig, fraktal aggregiert, würfel- oder quaderförmig u.a.m) und unterschiedlichen Agglomerationszuständen sein; dazu gehören beispielsweise oxidische Partikel, wie pyrogene Kieselsäure, beispielsweise AEROSIL^{®}e der EVONIK Degussa GmbH, Fällungskieselsäuren, beispielsweise SIPERNAT^{®}e der EVONIK Degussa GmbH, Quarzpartikel und weitere anorganische Oxidpartikel, wie Glaspartikel, Titandioxid, wie z. B. AEROXIDE^{®} TiO₂ P25 und AEROXIDE^{®} TiO₂ P90 der EVONIK Degussa GmbH, Aluminiumoxid, wie z. B. AEROXIDE^{®} Alu C der EVONIK Degussa GmbH, Zirkondioxid und/oder Cerdioxid, Eisenoxide, Kupferoxide u.a.m., silikatische Partikel wie beispielsweise Partikel aus Kaolin, Wollastonit, Talkum, Glimmer, Feldspäten u.a.m., Hydroxide wie Aluminiumtri- und/oder Magnesiumdihydroxid, Böhmit, Hydrotalcit, generell silikatischen Materialien, Beton, Mörtel, Gips, Mauerwerk, oxidischen Partikel, hydroxydische Eisenpigmente, wie beispielsweise FeO(OH), Carbonate, wie beispielsweise Calciumcarbonat und/oder Dolomit, Metalle wie Eisen, Kupfer, Zink, Nickel, Aluminium, Magnesium u.a.m, Metalllegierungen und/oder kohlenstoffhaltige Materialien, wie beispielsweise Graphit und/oder Ruß u. a. m.

Als organische partikuläre Substrate einsetzbar sind Partikel aus z. B. aus Siliconharzen, organomodifizierten Siliconen, organischen Polymeren und/oder Biopolymeren u.a.m.

Die unterschiedlichen Partikel können auch im Gemisch oberflächenmodifiziert werden.

Das Verhältnis von Partikelmasse zur härtbaren Masse ist abhängig von der zugänglichen Partikeloberfläche, dem gewünschten Modifizierungsgrad und dem Molekulargewicht des Modifizierungsagenzes. Bezogen auf die Masse der zu modifizierenden Partikel kann das erfindungsgemäße Modifizierungsagenz bzw. die härtbare Masse im Massen-Verhältnis von Partikelmasse:härtbare Masse im Bereich von 1:10 bis 1.000.000:1, bevorzugt von 1:1 bis 10.000:1 und besonders bevorzugt im Bereich von 2:1 bis 1.000:1 liegen.

Betrachtet man das Partikelgewicht im Verhältnis zur gesamten Mischung, die zur Oberflächenmodifizierung eingesetzt wird, bestehend aus Zusammensetzungen enthaltend den oder die erfindungsgemäßen härtbaren Massen oder Modifizierungsmittel, ggf. Katalysator, Lösemittel, weitere Silanverbindungen, sowie sonstiger Hilfsstoffe, so kann das Massen-Verhältnis von Partikel-gewicht:Modifizierungsmischung im Bereich von 1:1.000 bis 100.000:1, bevorzugt im Bereich von 1:100 bis 1.000:1, besonders bevorzugt im Bereich 2:1 bis 1.000:1 liegen.

Makroskopische Oberflächen können gleichfalls nach den aus dem Stand der Technik bekannten Methoden mit den urethangruppen-haltigen Silylverbindungen beschichtet werden. Dabei können die Modifizierungsmittel entweder in Reinform oder aber in Abmischung mit weiteren Komponenten, z. B. anorganischen und/oder organischen Lösemitteln, reaktiven Komponenten wie mono-, oligo- oder polymeren Silanen, Acrylaten, Epoxiden, Hydroxyverbindungen, Aminen u.a.m. sowie weiteren Beschichtungskomponenten oder Hilfsstoffen, zur Oberflächenmodifizierung eingesetzt werden.

Die Applikation der urethangruppen-haltigen Silylverbindungen kann dabei in Reinform pur, in organischen oder anorganischen Lösemitteln, als wässerige Emulsionen, als Mischungen der urethangruppen-haltigen Silylverbindungen mit anderen Silylgruppen tragenden Verbindungen, in Kombination mit andersartig funktionalisierten Modifizierungsmitteln wie beispielsweise Isocyanaten, Hydroxylverbindungen, Epoxiden, Acrylaten, Aminen erfolgen.

Die Modifizierung makroskopischer Oberflächen mit den beschriebenen Materialien kann beispielsweise mit den aus dem Stand der Technik bekannten Verfahren wie Tauch-, Spray- oder Spin-Beschichtung, Fluten, Vernebeln, Aufpinseln, Aufrollen, Aufdrucken, Siebdrucken, Aufstempeln und - bei geeigneter Konsistenz der zur Oberflächenmodifizierung verwendeten erfindungsgemäßen Rezepturen - auch durch Pulverbeschichtungsverfahren durchgeführt werden. Weiterhin ist es auch möglich, Emulsionen aus den urethangruppen-haltigen Silylverbindungen in geeigneten organischen und/oder anorganischen Lösemitteln, ggf. unter Zusatz weiterer Stoffe wie z. B. Beschichtungskomponenten, Hilfsstoffen, wie beispielsweise Netzmitteln, Emulgatoren und/oder Rheologieadditiven, sowie Füllstoffe und/oder funktioneller Partikel, zur Modifizierung der Oberflächen zu verwenden.

Beispiele derartiger Oberflächen sind makroskopische und mikroskopische Oberflächen wie Oberflächen aus Glas, Lacken, Metallen, Halbleitermaterialien, oxidischen Materialien wie Steinen, Betonen oder Mörteln, Holz, organischen und anorganischen Fasern, Geweben und Partikeln, Polymeren, Biopolymeren, Kork, Leder, Papier, Tissue, u. a. m.

Die Anwendungsmöglichkeiten derart modifizierter Oberflächen oder Partikeloberflächen sind vielfältig. So können derart behandelte Partikel beispielsweise als Füllstoffe für Polymere bzw. die Herstellung von Polymercompounds, Nanokomposite und Masterbatches verwendet werden. Die Verwendung der erfindungsgemäßen Urethangruppen tragenden Silylverbindungen kann dabei dergestalt sein, dass man entweder die zu modifizierenden Partikel in einem vorangeschalteten Prozess modifiziert und dann im Polymer dispergiert, ebenso ist es aber auch möglich, die Urethangruppen tragenden Silylverbindungen bei der Dispergierung der Füllstoffe im jeweiligen Polymer zuzusetzen, beispielsweise über eine Flüssigdosierung im Extruder unter Nachschaltung einer effektiven Dispergierstrecke. Überraschenderweise gelingt i.d.R. die Partikeloberflächenmodifizierung mit den Urethangruppen tragenden Silylverbindungen ohne ein Verklumpen oder Aggregieren der zu modifizierenden partikulären Materialien trotz des multifunktionellen Charakters der Präpolymere.

Weiterhin können erfindungsgemäß oberflächenmodifizierte Partikel beispielsweise eingesetzt werden als Bestandteile von Reaktivverdünnern, Emulsionen, Netzmitteln, Lacken, Haftvermittlern, Bindemitteln, Weichmachern, Thixotropiermitteln, Fungiziden, Flammschutzmitteln, Pigmenten, Füllstoffen, funktionalen Additiven in Kunststoffen, polymeren Schäumen, organischen Harzen oder Silikonharzen, ggf. unter reaktiver Anbindung an die jeweiligen Matrices, Melt-Flow-Index-Verbesserern in Spritzgussanwendungen, Textil- oder Faser-Gleitadditiven, Schmiermitteln, Mattierungsmitteln, Ad- oder Absorbentien, selbstdispergierbaren Partikeln, partikulären Emulgatoren, Entschäumern, Bindemitteln für keramischen Massen, Bautenschutzmitteln, Verkapselungsmitteln, Versiegelungen, antistatischen Additiven, Rieselhilfsmitteln, mikrobiziden Additiven, Fluoreszenzmarkern, Effektpigmenten, Mattierungsmitteln Trennmitteln, tieftemperaturbeständigen Kabelbeschichtungen, leitfähigen Beschichtungen, Leiterbahnen, antistatischen Beschichtungen, elektronischen und/oder elektrischen Bauteilen, Gummiteilen und Membranen, Schlichten in der Textil- und Glasfaserindustrie, Papier, Additiven für Toner, Abrasiva oder Faltenkaschierungsmittel in Kosmetika, Formulierungsmitteln oder Trägermaterialien, Farb- und Konservierungsstoffen, Beschichtungen, Korrosionsschutzmitteln, Farben und/oder Lacken, tribologischen und/oder haptischen Beschichtungen zur Erzielung physikalischer Effekte auf Oberflächen, wie z. B. Superhydrophobie, temperaturabhängiger Benetzbarkeit, Abperleffekten, Beeinflussung des Anschmutzungsverhaltens und des Schmutzentfernungsverhaltens an festen Oberflächen auf Bauten, Textilien oder Fasern sowie der Anhaftung von Kondensaten und Eis an mit den erfindungsgemäßen beschichteten ausgerüsteten Oberflächen und Partikeln,. als Gleitadditive bzw. Schmiermittel, in Versiegelungen, zur Erzielung von haptischen Effekten, wie beispielsweise eines seidigen Griffes (Soft-Touch-Oberflächen) oder einer bestimmten Oberflächengriffigkeit oder -rauhigkeit (Grip), als Mattierungsmittel, als Anbindungsstellen für weitere Materialien, wie beispielsweise andere Beschichtungsmaterialien, als Ad- oder Absorbentien in beispielsweise Papier- oder Filtermaterialien oder Stoffen, als selbstdispergierbare Partikel zur Herstellung von Dispersionen, als partikuläre Emulgatoren (für sog. "Pickering-Emulsionen" (s. a. "Emulsions", Spencer Umfreville Pickering, Journal of the Chemical Society, Transactions (1907), 91, 2001-2021), als reaktive und/oder vernetzbare Partikel, ggf. dispergiert in flüssigen Medien, als wirksame Komponenten in Entschäumern, in Bautenschutzmitteln, beispielsweise als aktive Komponenten zur integralen Massenhydrophobierung, als strukturierte, hydrophobe Komponente zur Oberflächenhydrophobierung oder als Träger für aktive, flüssige Komponenten, als (ggf. reaktive) Verkapselungsmittel, wie z. B. für Core-Shell-Partikel oder zur Mikroverkapselung flüssiger Systeme, zur Modifizierung von Membranmaterialien, bspw. zur Erzielung einer bestimmten, einstellbaren Porosität, Selektivität oder Permeabilität, als antistatische Additive, beispielsweise nach einer hydrophilen oder hygroskopischen Partikeloberflächenmodifizierung, als Rieselhilfsmittel, als Additive zur Erzielung oder Verbesserung der Kratzfestigkeit der mit den Partikeln ausgestatteten Materialien oder Oberflächen oder als partikuläre Additive mit weiteren Funktionen, beispielsweise als mikrobizide Additive, als Fluoreszenzmarker oder als Effektpigmente, als Trennmittel, als Bestandteile für tieftemperaturbeständige Kabelbeschichtungen, als Herstellungskomponenten von Gummiteilen und Membranen, als Schlichte oder Bestandteile für Schlichten in der Textil- und Glasfaserindustrie, für Papier, als Additive für Toner, als Abrasiva oder Faltenkaschierungsmittel in Kosmetika, als über einen längeren Zeitraum hinweg Wirkstoffe oder Hilfsstoffe freisetzende Formulierungsbestandteile bzw. Trägermaterialien, wobei als freizusetzende Substanzen beispielsweise kosmetische Öle und Wirkstoffe, Duftstoffe, pharmazeutische Wirkstoffe, antimikrobielle Wirkstoffe, auch zum Beispiel Silber und silberhaltige Verbindungen, sowie Farb- und Konservierungsstoffe in den Partikeln vorhanden sein können, u.a.m..

Ein weiterer Gegenstand der Erfindung sind somit die unter Verwendung der Urethangruppen tragenden härtbaren Massen hergestellten, oben genannten beschichteten Flächen und Stoffe, Materialien.

Die reaktiven härtbaren Massen können zur Oberflächenmodifizierung oder als Beschichtung, als Bulkmaterial sowie auch, beispielsweise durch eine Suspensionspolymerisation, zur Herstellung partikulärer Materialien verwendet werden. Deren Vernetzung zu festen duroplastischen Endprodukten und Fixierung auf reaktive Gruppen, insbesondere Hydroxylgruppen aufweisenden Untergründen, erfolgt auf einfache Weise in Gegenwart von Wasser und wahlweise unter Zusatz von Säure oder Base oder anderer Beschleuniger, wobei durch Erhöhung der Temperatur während des Härtungsvorgangs die Härtungsgeschwindigkeit gesteuert werden kann.

Dies gestattet es, unterschiedlichste Oberflächen, bestehend zum Beispiel aus Metalloxiden, Mischoxiden, Nitriden, Hydroxiden, Carbiden, Carbonaten, Silikaten, Pigmenten, Rußen, Elementen oder Legierungen sowie auch Oberflächen aus organischen Materialien zu modifizieren. Darüber hinaus sind natürlich auch die Oberflächen organischer Partikel, wie solcher aus Siliconharzen, organomodifizierten Siliconen, organischen Polymeren oder Biopolymeren, einer Oberflächenmodifizierung zugänglich.

Damit können die härtbaren Massen beispielsweise als Grundstoffe für die Herstellung von Klebstoffen, als reaktive Vernetzer, als Haftvermittler und Primer sowie Bindemittel für Metalle, Glas und Glasfasern/Glasgewebe, Holz, Holzwerkstoffen, Naturfasern, zur Ausrüstung und Behandlung von gegebenenfalls textilen Flächengebilden und Fasern aus natürlichen und/oder synthetischen sowie mineralischen Rohstoffen sowie beispielsweise auch Kork, Leder, Papier, Tissue, silikatischen und oxidischen Materialien dienen.

Der gezielte Einbau der sich über hydrolytische Prozesse an Mauerwerk, Beton, Mörtel, usw. verankernden Alkoxysilylgruppierungen erweist sich als äußert vorteilhaft bei Einsatz derartig ausgerüsteter Systeme im Bereich der Bauwirtschaft, wo es um die verbindende und isolierende Abdichtung von z.B. Zargen für Fenstern und Türen in Rohbauten geht.

Ein weiterer Gegenstand der Erfindung ist die Bautenhydrophobierung durch Verwendung der härtbaren Massen als Bestandteil von Hydrophobierungsmitteln und die damit je nach Anwendungszweck gewährleistete und gezielt einstellbare Hydrophobie der Oberfläche, die einerseits eine Durchnässung der Oberfläche vermeiden hilft, andererseits aber Wasserdampf passieren lässt.

Insbesondere bei Urethangruppen aufweisenden Silylverbindungen mit einem hydrophoben Rest oder aber hohen PO, BO oder SO-Gehalt (Gehalt von Propylenoxid, Butylenoxid und/oder Styroloxid) lassen sich hohe Hydrophobierungsraten erzielen. Insbesondere SO-haltige Polyether sind z. B. gut geeignet, Kohlenstoffmaterialien, wie z. B. Graphit und/oder Ruß zu modifizieren, so dass diese z.B. einfacher zu dispergieren sind.

Die Ausrüstung oder Behandlung der Flächengebilde dient einerseits dem Schutz der Oberfläche oder Faser, deren Eigenschaftsverbesserung und/oder Eigenschaftsveränderungen oder der Erzielung neuer Eigenschaftsprofile.

So können beispielsweise Graphit und auch hexagonales Bornitrid in einen Urethangruppen aufweisenden Silylpolyether eingearbeitet haben, um sogenannte Gleitlacke herzustellen. Diese Gleitlacke weisen als haptischen Effekt "Glätte" auf, im Unterschied zu beispielsweise mit AEROSIL^{®} 200 gefüllten Beschichtungen, die sehr "griffig" erscheinen.

Ein weiterer Gegenstand der Erfindung sind die so hergestellten tribologischen und/oder haptischen Beschichtungen enthaltend Graphit bzw. Bornitrid.

Ein weiterer Gegenstand der Erfindung sind Dichtungsmassen und/oder Klebemassen enthaltend die erfindungsgemäßen härtbaren Massen, wobei auch eine Oberflächenbeschichtung selbst bereits abzudichten oder zu kleben vermag. Diese Dichtungs- und/oder Klebemassen können insbesondere Gleitadditive wie beispielsweise auch MoS₂ oder PTFE-Partikel enthalten.

Weiterhin können die härtbaren Massen auch bei der Herstellung von elektrischen und/oder elektronischen Bauteilen wie beispielsweise auch OLEDs, Solarpanels Verwendung finden. Dabei können als Additive leitfähige Partikel oder ionische Flüssigkeiten enthalten sein und damit den Einsatz in leitfähigen Beschichtungen und leitfähigen Klebern, beispielsweise in Leiterbahnen, zur Kontaktierung und/oder antistatischen Ausrüstung, ermöglichen.

Die härtbaren Massen können alleine oder als Additive in wässrigen Systemen zur Behandlung der genannten Flächengebilde und Fasern genutzt werden und ermöglichen damit den Einsatz der so ausgerüsteten Flächengebilde und Fasern im Hygiene-, Medizin-, Bau-, Automobil-, Heimtextil-, Bekleidungstextil-, Sport- und Agrarbereich.

Den so oberflächenmodifizierten Partikeln oder Flächengebinden kommen damit neue oder optimierte Eigenschaften zu, wie beispielsweise in Bezug auf Weichheit, Gleiten, Wassertransport/-aufnahme, Wasser-/Ölabweisung, UV-Schutz, Selbstreinigung (Lotus Effekt) für z.B. Markisen, Flammschutz, Erhöhung der Festigkeit bei höchstmöglicher Flexibilität, Antistatik, Resistenz gegen Bakterien, Viren, Chemikalien.

Weiterer Gegenstand der Erfindung ist daher auch ein Verfahren zur Oberflächenmodifizierung von Partikeln oder Flächengebilden, wobei die härtbaren Massen unter Vermischung und in Gegenwart geeigneter Vernetzungskatalysatoren rein oder aus geeigneten organischen und/oder anorganischen Lösemitteln auf die Partikeloberflächen oder aus Emulsionen aufgebracht werden, wo sie dann unter kovalenter oder physikalischer Anbindung ausreagieren können.

Bevorzugt werden als zu modifizierende Oberflächen anorganische und/oder organische Partikel oder Flächengebilde und/oder organomodifizierte Partikel oder Flächengebilde und/oder deren Mischungen miteinander verwendet.

Ein weiterer Gegenstand der Erfindung ist die Verwendung der härtbaren Massen in kosmetischen Anwendungen, als Additive in Lack- oder Nagellackformulierungen.

Weiterhin ist es mit den härtbaren Massen auch möglich, gezielt physikalische Effekte auf festen Substraten hervorzurufen, wie beispielsweise hydrophobe oder hydrophile Oberflächeneigenschaften. Dabei können derartige Effekte weiterhin auch noch einem zusätzlichen Stimulus unterliegen, wie beispielsweise der herrschenden Temperatur. Literaturbekannt weisen Polyether in Wasser temperaturabhängig sogenannte Trübungspunkte auf, die aus der Inkompatibilisierung zum umgebenden Medium bei steigender Temperatur resultieren. Es konnte gezeigt werden, dass es gelingt, über die Anbindung Urethangruppen aufweisender Silylpolyether an unterschiedlichen Oberflächen deren Kontaktwinkel gegenüber verschiedenen Flüssigkeiten, beispielsweise Wasser, temperaturabhängig zu gestalten.

Ein weiterer Gegenstand der Erfindung ist die Herstellung von flammhemmenden thermoplastischen Polymercompounds oder duroplastischen Formmassen enthaltend die erfindungsgemäßen härtbaren Massen, die darüber hinaus flammschützende und/oder flammenhemmenden Substanzen wie beispielsweise ATH (Aluminiumtrihydrat = Aluminiumhydroxid = Aluminiumtrihydroxid) oder MDH (Magnesiumdihydroxid) enthalten können. Derartige Polymercompounds werden bsp. Weise für die Herstellung von Kabelisolationsmaterialien auf Basis von Polypropylen, Polyethylen oder Ethylvinylacetat für Kabel und Kabelummantelungen eingesetzt oder es werden z.B. auf Basis von Polypropylen flammgeschützte Trennwände hergestellt, die in öffentlichen Gebäuden wie z.B. Sporthallen besonders hohen Anforderungen unterliegen.

Die so ausgerüsteten Flammschutzmassen, -compounds oder auch Elektrokabel weisen gegebenenfalls eine verbesserte mechanische Stabilität, verbesserte Dispergierung weiterer Additive, gute Extrudierbarkeit auch bei hohen Füllgrad mit partikulären Additiven (beispielsweise mit Talk, Calciumcarbonat, u.a.) sowie verbesserten Flammschutz oder eine geringere Rauchentwicklung bei starker Erhitzung auf. Insbesondere bei der Verwendung Siloxangruppen aufweisender Silylpolyether kann durch den Siliciumgehalt eine zusätzliche Stabilität im Brandfall gegeben sein, da nach Abbrand ein zusätzlich stabilisierend wirkender und brandhemmender Anteil an SiO₂ zurückbleibt. Außerdem wird bereits beim Abbrand zu einem früheren Zeitpunkt eine sogenannte Hautbildung forciert, die das weitere Ansteigen der Massetemperatur reduziert und damit das Voranschreiten des Brandes gehemmt, was z.B. bei Kabeln, die von einem Raum in den nächsten Raum führen, besonders relevant ist.

Ein weiterer Gegenstand der Erfindung sind Verbundwerkstoffe wie beispielsweise Wood-Plastic-Composites (WPC) die unter Verwendung der härtbaren Massen hergestellt werden, WPC's sind thermoplastisch verarbeitbare Verbundwerkstoffe, die aus unterschiedlichen Anteilen von Holz, Kunststoffen und Additiven bestehen, und durch thermoplastische Formgebungsverfahren, wie z.B. Extrusion, Spritzguss oder Presstechniken, verarbeitet werden. Gegenüber Polypropylen-Maleinsäureanhydrid-gepfropften Copolymeren weisen die neuartigen Silylpolyether-Composites eine verbesserte Anbindung an die Holz- oder Fasergrundkörper dieser Werkstoffe auf. Die härtbaren Massen binden dabei an die Fasern auf Basis Holz, Kokos oder anderen natürlich verfügbaren Faserprodukten unter gleichzeitiger Hydrophobierung dieser Oberfläche an und garantieren dadurch eine reduzierte Trockenzeit der Holzfaserpellets (Energieeinsparung!).

Ein weiterer Gegenstand der Erfindung sind Pulverlackhärter.

Ein weiterer Gegenstand der Erfindung sind Flüssigpasten, in denen man die härtbaren Massen anstelle beispielsweise eines gewöhnlichen Polyetherpolyols (PPG 1000), welches im Allgemeinen die zusätzliche Verwendung eines Dispergiermittels erfordert, alleinig verwendet, da der urethanisierte Silylpolyther die Eigenschaften beider Stoffe auf sich vereinigt. Derartige Pasten, die als Farbmittel Pigmente enthalten oder ggf. zusätzlich Farbstoffe u.a. Additive enthalten können, werden für die Einfärbung von polyolbasierten Systemen wir z.B. PU-Schaumstoffen, thermoplastischen Urethanen oder ähnlichem verwendet.

Die erfindungsgemäßen härtbaren Massen sind ferner einsetzbar als Bindemittel für die Bindung von Keramikpartikeln zur Herstellung von keramischen Erzeugnissen, insbesondere feuerfesten, keramischen Erzeugnissen aus Keramikpulver. Ein Gegenstand der Erfindung betrifft ferner die Verwendung des Bindemittels und ein Verfahren zur Herstellung vorgenannter keramischer Erzeugnisse, sowie keramische Erzeugnisse als solche, wobei feuerfeste keramische Erzeugnisse erfindungsgemäß besonders bevorzugt sind.

Feuerfeste Keramikerzeugnisse werden zum Schutz vor hohen Temperaturen in zahlreichen Industrieanlagen eingesetzt.

Bevorzugt werden niedrig bis mittelviskose Bindemittel mit <10.000 mPas eingesetzt, die zunächst eine vollständige, gleichmäßige Umhüllung aller keramischen Partikel in der Vorbereitungsphase gestatten, als Grundlage für anschließende Erzielung hoher Vernetzungsdichten und damit mechanischer Grundfestigkeiten bereits bei der Grünkörper- bzw. bei bereits höheren Temperaturen in der Braunkörper- oder gar Weißkörperherstellung.

Völlig überraschend konnte beobachtet werden, dass es bei Verwendung der erfindungsgemäßen reaktiven härtbaren Masse als Keramikbindemittel im Temperaturbereich zwischen beispielsweise 100 °C und 1.000 °C, vorzugsweise 200 °C und 800 °C, zu keinem oder allenfalls nur einem geringen Abfall der Werkstofffestigkeit (im Vergleich mit dem bei niedrigeren Temperaturen behandelten Grünkörper), d.h. Kaltdruckfestigkeit [MPa], kommt.

Keramikerzeugnisse schließen im Sinne dieser Erfindung auch getrocknete, getemperte und/oder gebrannte Keramikerzeugnisse ein. Der Begriff Keramikerzeugnis umfasst auch sogenannte Grünkörper. Insbesondere umfasst der Begriff Keramikerzeugnis hitzebeständige und/oder feuerfeste Keramikerzeugnisse, ebenso Formkörper und Werkstoffe, bei denen es sich um einen sogenannten Verbundwerkstoff handelt, d.h. die aus einem keramischen Werkstoff und mindestens einem anderem Werkstoff bzw. einer anderen Phase aufgebaut sind.

Das erfindungsgemäße, reaktive Keramikbindemittel enthaltend die härtbare Masse kann dem Keramikpulver, bezogen auf das Gesamtgewicht des Keramikpulvers, mit einem Gewichtsanteil von 0,01 bis 70 Gew.-%, vorzugsweise von 0,1 bis 50 Gew.-% und bevorzugt von 0,5 bis 30 Gew.-% und insbesondere bevorzugt 0,5 bis 5 Gew.-% zugesetzt werden.

Erfindungsgemäß bevorzugt sind Mengen dieser härtbaren Massen im Bereich von 0,05 bis < 10 Gew.-%, insbesondere 0,1 bis 5 Gew.-%, jeweils bezogen auf die Menge an keramischem Pulver. Wenn die Menge der zugegebenen härtbaren Masse unter 0,01 Gew.-% liegt, ist es sehr schwierig, ein gebranntes Erzeugnis mit hoher Festigkeit zu erhalten.

Erfindungsgemäß lässt sich die reaktive härtbare Masse zur Herstellung von keramischen Erzeugnissen, insbesondere von geformten und ungeformten, gebrannten und ungebrannten feuerfesten, keramischen Erzeugnissen, aus Keramikpulver/n verwenden.

Ein weiterer Gegenstand der vorliegenden Erfindung betrifft daher auch keramische härtbare Massen, die erfindungsgemäßes Keramikbindemittel und Keramikpulver aufweist. Die Keramikmassen können direkt verwendet werden oder zuerst zu Pulvern oder Granulaten verarbeitet werden. Gegenstand der Erfindung ist auch die Verwendung der erfindungsgemäßen urethanisierten härtbaren Massen als Reaktivverdünner, Emulsionen, Netzmittel, Lacke, Haftvermittler, Weichmacher, Thixotropiermittel, Fungizide, Flammschutzmittel, Pigmente, Füllstoffe, polymere Schäume, organische Harze oder Silikonharze, Melt-Flow-Index-Verbesserer, im Bautenschutz, zur Modifizierung von Textilien oder Fasern, als Gleitadditive, Schmiermittel, Mattierungsmittel, Ad- oder Absorbentien, selbstdispergierbare Partikel partikuläre Emulgatoren, Entschäumer, Bautenschutzmittel, Verkapselungsmittel, in Versiegelungen, als antistatische Additive, Rieselhilfsmittel, mikrobizide Additive, Fluoreszenzmarker, Effektpigmente, Trennmittel, tieftemperaturbeständige Kabelbeschichtungen, leitfähige Beschichtungen, Leiterbahnen, antistatische Beschichtungen, elektronische und/oder elektrische Bauteile, Gummiteile und Membranen, Schlichte in der Textil- und Glasfaserindustrie, Papieradditive, Additive für Toner, Abrasiva oder Faltenkaschierungsmittel in Kosmetika, Formulierungsmittel oder Trägermaterialien, Farb- und Konservierungsstoffe, Beschichtungen, Korrosionsschutzmittel, Farben, tribologische und/oder haptische Beschichtungen.

Geeignete Keramikpartikel können alle typischen, oxidischen, nichtoxidischen, saueren, oder basischen Keramikrohstoffe sowie Mischungen davon umfassen. Besonders bevorzugt sind Keramikerzeugnisse auf Al₂O₃-Basis. Auch Mischungen dieser Rohstoffe können vorliegen.

Besonders geeignet verwendbare keramische Pulver, insbesondere Mischungen keramischer Pulver sowie deren Rohstoffe umfassen:
Oxide, wie BeO, MgO, Al₂O₃, SiO₂, CaO, TiO₂, Cr₂O₃, MnO, Fe₂O₃, ZnO, ZrO₂, SrO, Y₂O₃, BaO, CeO₂, UO₂; und/oder Carbide, wie B₄C, Be₂C, Be₄C, Al₄C₃, SiC, TiC, Cr₃C₂, Mn₃C, Fe₃C, SrC₂, YC₂, ZrC, NbC, Mo₂C, BaC₂, CeC₂, HfC, TaC, WC, UC, Kohlenstoff z.B. in Form von Graphit, Ruß (Carbon Black) oder graphitiertem Kohlenstoffmaterial; und/oder Nitride, wie Be₃N₂, BN, Mg₃N₂, AlN, Si₃N₄, Ca₃N₂, TiN, VN, CrN, Mn₃N₂, Sr₃N₂, ZrN, NbN, Mo₃N₂, HfN, TaN, WN₂, UN; und/oder Boride, wie AlB₄, CaB₆, TiB₂, VB₂, CrB₂, MnB, FeB, CoB, NiB, SrB₆, YB₆, ZrB₂, NbB₂, MoB₂, BaB₆, LaB₆, CoB₆, HfB₂, TaB₂, WB, T UB₄; und/oder Silicide, wie CaSi, Ti₅Si₃, V₅Si₃, CrSi₂, FeSi, CoSi, ZrSi₂, NbSi₂, MoSi₂, TaSi₂, WSi₂; und/oder Mischungen der vorgenannten keramischen Stoffe.

Weitere keramische Partikel, die eingesetzt werden können, umfassen oxidische und nichtoxidische Verbindungen, Mischphasen usw., beispielsweise, Mullit (Al₆Si₂O₁₃), Mischkristalle aus dem System Al₂O₃-Cr₂O₃, MgSiO₄, CaSiO₄, ZrSiO₄, MgAl₂O₄, CaZrO₃, SIALON, ALON, und/oder B₄C-TiB₂.

Außerdem können keramische Partikel mit nicht stöchiometrischer Zusammensetzung, wie Ti0x-Silicate, Gläser und keramische Materialien mit einer Metallphase erfindungsgemäß verwendet werden.

Erfindungsgemäß verwendbare Keramikpartikel können auch calcinierte Tonerden, reaktive Tonerden, feinstgemahlene, feuerfeste Rohstoffe, wie Microsilica, Feuerfestton und/oder Bindeton umfassen.

Auch hoch stryroloxid-haltige urethanisierte Präpolymere können sich mit besonders vorteilhaften Eigenschaften bei der Verarbeitung zu Formmassen auszeichnen. Insbesondere lassen sich Kohlenstoffmaterialien, wie beispielsweise Ruße oder Graphite in den hoch stryroloxid-haltige Silylverbindungen 1 gut dispergieren, was zu vorteilhaften Ergebnissen/Eigenschaften bei den Formmassen führt.

Die Keramikmassen können zusätzlich Katalysatoren, übliche Zusatzstoffe, Bindemittel und/oder Additive aufweisen. Die Keramikmassen können insbesondere auch geringe Mengen an Formentrennmittel, Stabilisatoren und/oder Pigmenten enthalten.

Ferner kann die Verwendung von Keramikmassen enthaltend Keramikbindemittel in Kombination mit hydraulischen Bindemitteln, wie Tonerdezement, Portlandzement, gegebenenfalls mit Wasser in variablen Mengen, kann ebenfalls vorteilhaft sein.

Das reaktive erfindungsgemäße Keramikbindemittel, kann, bezogen auf das Gesamtgewicht des Keramikpulvers, in der Formmasse oder keramischen Masse mit einem Gewichtsanteil von 0,01 Gew.-% bis 70 Gew.-%, vorzugsweise von 0,1 bis 50 Gew.-% und bevorzugt von 0,5 bis 30 Gew.-% enthalten sein.

Die für die Bindung verantwortliche Reaktion zwischen keramischem Pulver und dem Alkoxysilylgruppen tragenden urethangruppen tragenden Präpolymer des erfindungsgemäßen, reaktiven Keramikbindemittels kann gegebenenfalls bereits bei Raumtemperatur stattfinden. Mit steigender Temperatur verfestigt sich die Bindung.

Bereits nach einer Temperaturbehandlung in mittlerem Temperaturbereich von 400 °C bis 1.000 °C oder teilweise sogar von 200 °C bis 600 °C können die Keramikerzeugnisse hohe Festigkeiten erreichen, wodurch ein Hochtemperaturbrand von > 1.000 °C nicht notwendig ist.

Überraschenderweise wurde nun gefunden, dass bei der Verwendung der erfindungsgemäßen Keramikbindemittel, enthaltend urethangruppen-haltige Alkoxysilylpräpolymere:
- in verhältnismäßig kürzerer Zeit bei gleichen Brenntemperaturen; und/oder
- bei verhältnismäßig niedrigen Brenntemperaturen in vergleichbaren Zeiten ein Brand von bruchfreien keramischen Erzeugnissen mit hervorragenden physikalischen und mechanischen Eigenschaften erzielt werden kann.

Das Ausmaß der Härtung ist von der Form des keramischen Erzeugnisses abhängig. Auf jeden Fall wird der keramische Formkörper so weit ausgehärtet, bis er die zur Vermeidung einer Formveränderung während des Brennvorgangs erforderliche Festigkeit besitzt.

Weitere Gegenstände der Erfindung werden durch die Ansprüche beschrieben, deren Offenbarungsgehalt vollumfänglich Bestandteil dieser Beschreibung ist.

Die erfindungsgemäßen Verwendungen und Verfahren der härtbaren Massen werden nachfolgend beispielhaft beschrieben, ohne dass die Erfindung als auf diese beispielhaften Ausführungsformen beschränkt angesehen werden kann.

Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können.

### Ausführungsbeispiele:

In den nachfolgenden Beispielen wurden die folgenden härtbaren Massen, enthaltend Trialkoxysilylgruppen enthaltende Silylverbindungen 1 eingesetzt, die gemäß DE 10 2008 000360.3 nach dem Verfahrensprinzip der DMC-katalysierten Alkoxylierung von 3-Glycidyloxypropyltriethoxysilan (Dynasylan® GLYEO) der Evonik Degussa GmbH hergestellt wurden. PO bedeutet Propylenoxid.

GPC-Messungen zur Bestimmung der Polydispersität und mittleren Molmassen wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

Die Viskositäten wurden in Anlehnung an die DIN 53019 mit einem Rotationsviskosimeter der Marke Brookfield (Modell LVT) bei 25°C gemessen.

Der NCO-Gehalt in Prozent wurde über Rücktitration mit 0,1 molarer Salzsäure nach Reaktion mit Butylamin gemäß DIN EN ISO 11909 bestimmt.

### Trialkoxysilylpolyether SP-1:

Fast farbloser, niedrigviskoser Silylpolyether mit vierfacher Trialkoxysilanfunktionalität
Chemischer Aufbau gemäß Monomerendosage:
Polypropylenglykolmonobutylether (400 g/mol) + 2 mol PO + (21 mol PO / 4 mol GLYEO statistisch) + 2 mol PO
Mittlere Molmasse M_{w} 2760 g/mol, Polydispersität M_{w}/Mₙ 1,38, Viskosität (25 °C) 365 mPa*s.

### Trialkoxysilylpolyether SP-2:

Fast farbloser, niedrigviskoser Silylpolyether mit vierfacher Trialkoxysilanfunktionalität
Chemischer Aufbau gemäß Monomerendosage:
Polypropylenglykol (2000 g/mol) + 17 mol PO + (103 mol PO / 4 mol GLYEO statistisch)
Mittlere Molmasse M_{w} 10900 g/mol, Polydispersität M_{w}/Mₙ 2,16, Viskosität (25 °C) 5050 mPa*s.

### Härtbare Masse enthaltend den urethanisierten Silylpolyether USP-1:

Herstellung eines NCO- und urethangruppenhaltigen Silylpolyethers
150,2 g (49 mmol entspricht 49 mmol OH-Funktionen) des Silylpolyethers SP-1 wurden in einen 250 mL Dreihalskolben mit Rückflusskühler, Thermometer und KPG-Rührer vorgelegt. Anschließend wurden 10,8 g Isophorondiisocyanat -IPDI (49 mmol entspricht 98 mmol NCO-Funktionen) langsam bei Raumtemperatur zudosiert und die Mischung mit 0,08 g Dibutylzinndilaurat versetzt. Das Reaktionsgemisch wurde auf 60 °C erwärmt und eine Stunde bei dieser Temperatur gerührt. Man erhielt ein klares Produkt mit einer Viskosität von 760 mPa*s und einem NCO-Wert von w(NCO) = 1,26 %.

Die Einwaage an dem Isophorondiisocyanat wurde so gewählt, dass die NCO-Gruppen im Überschuss bezüglich der OH-Gruppen des Silylpolyethers SP-1 vorliegen, so dass sich Produkte bilden, die neben den Alkoxysilylgruppen auch noch freie NCO-Gruppen tragen.

### Härtbare Masse enthaltend den urethanisierten Silylpolyether USP-2:

Herstellung eines urethangruppenhaltigen Silylpolyethers
100 g des Silylpolyethers SP-1 (32 mmol entspricht 32 mmol OH-Funktionen) wurden in einen 250 mL Dreihalskolben mit Rückflusskühler, Thermometer und KPG-Rührer vorgelegt. Anschließend wurden 3,6 g Isophorondiisocyanat (16 mmol entspricht 32 mmol NCO-Funktionen) langsam bei Raumtemperatur zudosiert und die Mischung mit 0,05 g Dibutylzinndilaurat versetzt. Das Reaktionsgemisch wurde auf 60 °C erwärmt und zwei Stunden bei dieser Temperatur gerührt. Man erhielt ein klares Produkt mit einer Viskosität von 880 mPa*s und einem NCO-Wert von w(NCO) = 0 %.

Die Einwaage des Isophorondiisocyanats wurde so gewählt, dass die OH Gruppen des Silylpolyethers im equimolarem Verhältnis zu den NCO-Funktionen vorliegen, so dass Polyether miteinander verknüpft werden und sich höhermolekulare Polyether bilden.

### Härtbare Masse enthaltend den urethanisierten Silylpolyether USP-3:

Herstellung eines urethangruppenhaltigen Silylpolyethers mit einer Triethoxysilyl-Endgruppe
100 g des Silylpolyethers SP-1 (32 mmol entspricht 32 mmol OH-Fuktionen) wurden in einen 250 mL Dreihalskolben mit Rückflusskühler, Thermometer und KPG-Rührer vorgelegt. Anschließend wurden 8,0 g 3-Isocyanatopropyltriethoxysilan (32 mmol entspricht 32 mmol NCO-Funktionen) langsam bei Raumtemperatur zudosiert. Die Mischung wurde auf 80 °C erwärmt und mit 0,05 g Dibutylzinndilaurat versetzt. Das Reaktionsgemisch wurde eine Stunde bei dieser Temperatur gerührt. Man erhielt ein bei Raumtemperatur klares Produkt mit einer Viskosität von 800 mPa*s und einem NCO-Wert von w(NCO) = 0 %.

Die Einwaage des Isocyanatopropyltriethoxysilans wurde so gewählt, dass die OH Gruppen des Silylpolyethers im equimolarem Verhältnis zu den NCO-Funktionen vorliegen, so dass die OH-Gruppen möglichst vollständig verbraucht werden und die Polyether mit weiteren Triethoxysilylgruppen modifiziert werden.

### Härtbare Masse enthaltend den urethanisierten Silylpolyether USP-4:

Herstellung eines urethangruppenhaltigen Silylpolyethers mit Desmodur^{®} N 3300
100 g des Silylpolyethers SP-1 (32 mmol entspricht 32 mmol OH-Funktionen) wurden in einen 250 mL Dreihalskolben mit Rückflußkühler, Thermometer und KPG-Rührer vorgelegt. Anschließend wurden 6,25 g Desmodur^{®} N 3300 (w(NCO) = 21,8 % entspricht 32 mmol NCO-Funktionen) der Firma Bayer (aliphatisches Polyisocyanat, HDI-Trimer) langsam bei Raumtemperatur zudosiert. Die Mischung wurde auf 80 °C erwärmt und mit 0,05 g Dibutylzinndilaurat versetzt. Es setzte eine exotherme Reaktion ein, bei der sich das Reaktionsgemisch auf 105 °C erhitzte. Das Reaktionsgemisch wurde anschließend bei 80 °C eine Stunde gerührt. Man erhielt ein bei Raumtemperatur klares Produkt mit einer Viskosität von 1.665 mPa*s und einem NCO-Wert von w(NCO) = 0 %.

Die Einwaage des Desmodur^{®} N 3300 wurde so gewählt, dass die OH Gruppen des Silylpolyethers im equimolarem Verhältnis zu den NCO-Funktionen vorliegen, so dass die OH-Gruppen möglichst vollständig verbraucht werden und Polyether miteinander verknüpft werden, so dass ein verzweigter Silylpolyether gebildet wird.

### Härtbare Masse enthaltend den urethanisierten Silylpolyether USP-5:

Herstellung eines urethangruppenhaltigen Silylpolyethers mit IPDI
100 g des Silylpolyethers SP-2 (10 mmol entspricht 20 mmol OH-Funktionen) wurden in einen 250 mL Dreihalskolben mit Rückflußkühler, Thermometer und KPG-Rührer vorgelegt. Anschließend wurden 1,48 g Vestanat^{®} IPDI (6,7 mmol entspricht 13,4 mmol NCO-Funktionen) der Firma Evonik Degussa GmbH (aliphatisches Isocyanat) langsam bei Raumtemperatur zudosiert. Die Mischung wurde auf 80 °C erwärmt und mit 0,05 g Dibutylzinndilaurat versetzt. Das Reaktionsgemisch wurde anschließend bei 80 °C eine Stunde gerührt. Man erhielt ein bei Raumtemperatur klares Produkt mit einer Viskosität von 21.750 mPa*s und einem NCO-Wert von w(NCO) = 0 %.

Die Einwaage des Vestanat^{®} IPDI wurde so gewählt, dass die OH Gruppen des Silylpolyethers im Überschuss bezogen auf die NCO-Funktionen vorliegen, so dass mehrere Polyether miteinander verknüpft werden, und dementsprechend ein hochmolekularer Blockpolyether aufbaut wird.

### Härtbare Masse enthaltnend den urethanisierten Silylpolyether USP-6:

Herstellung eines Urethangruppen- und Isocyanatgruppen-haltigen Silylpolyethers mit IPDI
150 g des Silylpolyethers SP-2 (15 mmol entspricht 30 mmol OH-Funktionen) wurden in einen 250 mL Dreihalskolben mit Rückflußkühler, Thermometer und KPG-Rührer vorgelegt. Anschließend wurden 6,67 g Vestanat^{®} IPDI (30 mmol entspricht 60 mmol NCO-Funktionen) der Firma Evonik Degussa GmbH (aliphatisches Isocyanat) langsam bei Raumtemperatur zudosiert. Die Mischung wurde auf 60 °C erwärmt und mit 0,08 g Dibutylzinndilaurat versetzt. Das Reaktionsgemisch wurde anschließend bei 60 °C eine Stunde gerührt. Man erhielt ein bei Raumtemperatur klares Produkt mit einer Viskosität von 16.000 mPa*s und einem NCO-Wert von w(NCO) = 0,68 %.

Die Einwaage des Vestanat^{®} IPDI wurde so gewählt, dass die OH Gruppen des Silylpolyethers im Unterschuss bezogen auf die NCO-Funktionen vorliegen, so dass ein Teil der NCO-Funktionen übrig bleibt uns sich dementsprechend Polymere bilden, die sowohl NCO- als auch Alkoxysilylgruppen tragen.

### Herstellung von Beschichtungen:

20 g des urethanisierten Silylpolyethers, 0,4 g Wasser und 0,4 g Dibutylzinndiacetylacetonat wurden in einen Becher eingewogen und mittels Dissolver für 20 s bei 1000 U/min intensiv durchmischt. 10 g dieser härtbaren Mischung wurden bei Raumtemperatur in eine Aluschale gegossen. Während des Aushärtens wurde in kurzen Abständen mit einer Pipettenspitze die Härtung überprüft. Bleibt keine Probe mehr kleben, hat sich eine Haut gebildet. Die folgenden Hautbildungszeiten als Maß für die Härtungsgeschwindigkeit wurden gemessen:

| Urethanisierter Silylpolyether: | Hautbildungszeit: |
|---|---|
| USP-1 | 2,5 h |
| USP-2 | 2,5 h |
| USP-3 | 1,5 h |
| USP-4 | 20 min |
| USP-5 | 2 h |
| USP-6 | 2 h |

Die Aushärtegeschwindigkeit NCO-Gruppen tragender urethanisierter Silylpolyether kann durch Zusatz von Aminen beschleunigt werden. In einer Variante des vorgenannten Härtungsexperiments mit USP-1 wurde der härtbaren Mischung zusätzlich 17 g Ethylendiamin zugefügt:

| Urethanisierter Silylpolyether: | Hautbildungszeit: |
|---|---|
| USP-1 mit Ethylendiamin | 30 min |

Nach der Aushärtung wurden etwa 2 mm dicke Beschichtungen in der Aluschale erhalten.

### Herstellung einer wässrigen Emulsion:

12,0 g TEGO^{®} Alkanol S100P (Stearylalkohol, Polyoxyethylen (100) Ether, Evonik Goldschmidt GmbH), 3,0 g TEGO^{®} Alkanol TD6 (Isotridecanol, Polyoxyethylen (6) Ether, Evonik Goldschmidt GmbH) und 15,0 g Wasser wurden in einem Glasgefäß auf 60 °C erwärmt und mit einer Mizerscheibe bei 1000 U/Min gerührt, bis eine homogene, viskose Paste entstand. Unter Zuhilfenahme eines Tropftrichters wurde innerhalb von 30 Minuten 100,0 Gramm des urethanisierten Silylpolyethers USP-1 tropfenweise in die Paste unter Rühren eingearbeitet. Die fertige Paste wurde 10 Minuten bei 1000 U/Min gerührt. Danach wurde die Paste mit den restlichen 200 g Wasser verdünnt. Es entstand eine Emulsion.

Die Tropfengrößenverteilung wurde mittels dynamischer Lichtstreuung (Malvern HPPS mit 633 nm HeNe-Laser) gemessen. Die Auswertung der Korrelationsfunktion mit dem CONTIN-Algorithmus ergab eine monomodale Tropfengrößenverteilung mit einem durchschnittlichen Radius von 115 nm.

### Verfahren zum Einsatz als keramische Binder bei der Herstellung von Feuerfestmaterialen:

Ein hochreiner Sinterkorund, T60 erhältlich bei der Firma ALMATIS GmbH in Ludwigshafen, mit folgendem Kornaufbau:

| | | |
|---|---|---|
| Grobkorn | 1 bis 2 mm | 50 Gew.-% |
| Mittelkorn | 0,2 bis 0,5 mm | 10 Gew.-% |
| Mehl | < 0,1 mm | 40 Gew.-% |

wurde mit 4 Gew.-Anteilen des jeweiligen urethanisierten Silylpolyethers homogen gemischt. Aus den Mischungen wurden zylindrische Prüfkörper von 36 mm Durchmesser unter einem Pressdruck von 100 MPa hergestellt und anschließend bei 200 °C und 1.500 °C 2 h gebrannt.

Nach dem Brand besaßen die keramischen Prüfkörper folgende Kaltdruckfestigkeit/MPa (DIN EN 993-1):

**Urethanisierter Silylpolyether USP-1:**

| | |
|---|---|
| Brenntemperatur 200 °C: | 13,5 MPa |
| Brenntemperatur 1500 °C: | 96,3 MPa |

**Urethanisierter Silylpolyether USP-4:**

| | |
|---|---|
| Brenntemperatur 200 °C: | 14,7 MPa |
| Brenntemperatur 1500 °C: | 106,1 MPa |

### Lackbeschichtung einer Glasplatte:

Mit einer Pipette wurde 1,00 ml Dibutylzinndiacetylacetonat zu 50 ml des urethanisierten Silylpolyethers USP-6 gegeben. Beide Komponenten wurden mit einer Mizerscheibe bei 1000 U/min homogenisiert. Auf einer mit Isopropanol gereinigten, trockenen Glasplatte wurde mit einer Kastenrakel eine Präpolymerschicht mit einer Dicke von 150 Mikrometer aufgezogen. Das aufgezogene urethanisierte Präpolymer härtet bei Raumtemperatur und ca. 60 % rel. Luftfeuchtigkeit zu einem klaren Film.

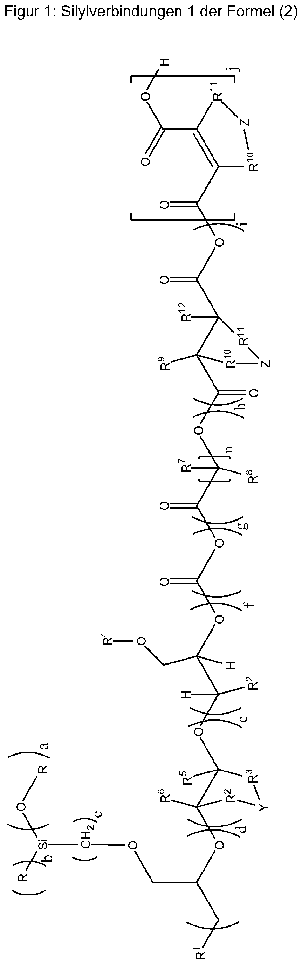

## Patentansprüche

1. Härtbare Masse enthaltend urethangruppenhaltige Reaktionsprodukte, die erhältlich ist durch die Umsetzung von
a) mindestens einer eine oder mehrere Isocyanatgruppen aufweisenden Verbindungen mit
b) mindestens einer eine oder mehrere Alkoxysilylgruppen tragenden Verbindung, die zusätzlich mindestens eine Hydroxylgruppe trägt
c) optional in Anwesenheit von einem oder mehreren Katalysatoren
d) optional in Anwesenheit von weiteren gegenüber den Reaktionsprodukten reaktiven Komponenten, insbesondere solchen, die funktionelle Gruppen mit protischem Wasserstoff besitzen,
e) optional in Anwesenheit von weiteren gegenüber den Reaktionsprodukten und Edukten nicht reaktiven Verbindungen,
wobei als Komponente (b) eine oder mehrere Silylverbindungen 1 der Formel (2) 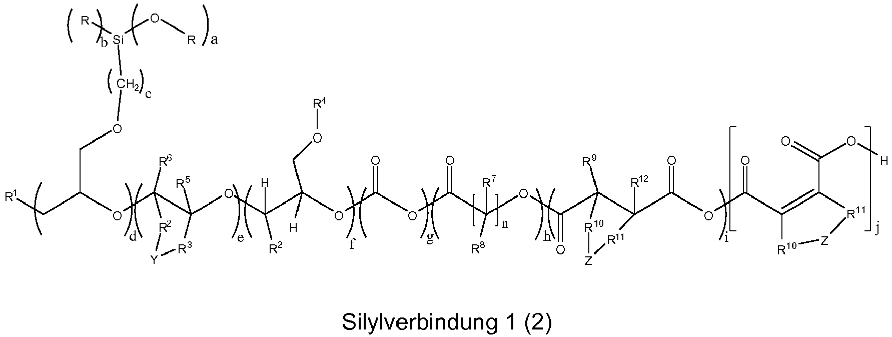 wobei
a eine ganze Zahl von 1 bis 3 ist,
b eine ganze Zahl von 0 bis 2 ist, und die Summe von a und b gleich 3 ist,
c eine ganze Zahl von 0 bis 22 ist,
d eine ganze Zahl von 2 bis 500 ist,
e eine ganze Zahl von 2 bis 10.000 ist,
f eine ganze Zahl von 0 bis 1.000 ist,
g eine ganze Zahl von 0 bis 1.000 ist,
h, i und j unabhängig voneinander ganze Zahlen von 0 bis 500 sind,
n eine ganze Zahl zwischen 2 und 8 ist,
R unabhängig voneinander einen oder mehrere gleiche oder verschiedene Reste, ausgewählt aus linearen oder verzweigten, gesättigten, einfach oder mehrfach ungesättigten Alkylresten mit 1 bis 20 Kohlenstoffatomen oder Halogenalkylgruppen mit 1 bis 20 Kohlenstoffatomen darstellt; sowie,
R¹ ist eine Hydroxylgruppe oder ein gesättigter oder ungesättigter linearer, verzweigter oder cyclischer oder weiter substituierter oxyorganischer Rest mit 1 bis 1.500 Kohlenstoffatomen, wobei die Kette auch durch Heteroatome wie O, S, Si und/oder N unterbrochen sein kann, oder ein oxyaromatisches System enthaltender Rest,
R² oder R³, sowie R⁵ oder R⁶ sind gleich oder auch unabhängig voneinander H oder ein gesättigter Kohlenwasserstoffrest, ist Y nicht vorhanden
R⁴ unabhängig voneinander ein linearer oder verzweigter Alkylrest von 1 bis 24 Kohlenstoffatomen oder ein aromatischer oder cycloaliphatischer Rest ist, der gegebenenfalls seinerseits Alkylgruppen tragen kann;
R⁷ und R⁸ sind unabhängig voneinander entweder Wasserstoff, Alkyl-, Alkoxy-, Aryl- oder Aralkylgruppen,
R⁹, R¹⁰, R¹¹ und R¹² sind unabhängig voneinander entweder Wasserstoff, Alkyl-, Alkenyl-, Alkoxy-, Aryl- oder Aralkylgruppen, wobei der Kohlenwasserstoffrest cycloaliphatisch oder aromatisch über das Fragment Z verbrückt sein kann und Z sowohl einen divalenten Alkylen- als auch Alkenylenrest darstellen kann,
mit der Maßgabe, dass die Fragmente mit den Indices d, e, f, und/oder h untereinander frei permutierbar, das heißt innerhalb der Polyetherkette gegeneinander austauschbar sind und wahlweise statistisch verteilt oder blockartig aneinandergereiht vorliegen können und damit in der Sequenz innerhalb der Polymerkette gegeneinander austauschbar sind, wobei cyclische Anhydride sowie Kohlendioxid nicht in homologen Blöcken vorliegen,
wobei bezogen auf das individuelle Molekül des Reaktionsprodukts im Durchschnitt mehr als eine Alkoxysilylgruppe pro Urethan- oder deren Reaktionsfolgeprodukte, wie Allophanate und/oder Biuret-Gruppen oder auch Harnstoffgruppen enthalten sind,
verwendet wird.

2. Härtbare Masse nach Anspruch 1, **dadurch gekennzeichnet, dass** die Isocyanatgruppen aufweisende Komponente (a) keine Alkoxysilyl- und/oder Alkylsilylgruppen trägt.

3. Härtbare Masse nach zumindest einem der Ansprüche 1 bis 2 enthaltend weitere Verbindungen mit mindestens einer Isocyanat-, Hydroxy-, Amino-, Epoxy- und ungesättigten C=C-Gruppe, Acrylate, Methacrylate, Vinyl-, Allyl-Verbindungen und/oder reaktive Silane oder silylfunktionelle Verbindungen.

4. Härtbare Masse nach Anspruch 3, **dadurch gekennzeichnet, dass** als Silane solche der Formel (4)
UₓSiV₍₄₋ₓ₎ Formel (4)
wobei U gleiche oder verschiedene, in Anwesenheit von Wasser und katalytischer Mengen Brönstedt-Säure bei Temperaturen bis 100°C nicht hydrolysierbare Gruppen, V = gleiche oder verschiedene in Anwesenheit von Wasser und katalytischer Mengen Brönstedt-Säure bei Temperaturen bis 100°C hydrolysierbare Gruppen oder Hydroxygruppen und x = 1, 2, 3 oder 4 darstellen,
und/oder als silylfunktionelle Verbindungen solche der Formel (5) 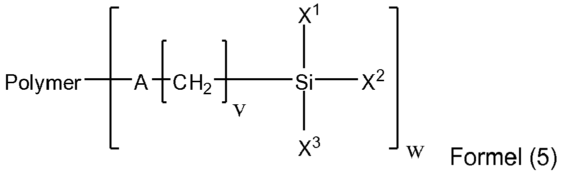 wobei
X¹, X² und X³ unabhängig voneinander Alkyl- oder Alkoxyreste mit 1-8 C-Atomen sind,
A einen Carboxy-, Carbamat-, Amid-, Carbonat-, Ureido- oder Sulfonatgruppe enthaltenden Rest darstellt oder ein Sauerstoffatom bedeutet,
w eine ganze Zahl von 1 bis 8 ist und
v eine ganze Zahl von 1 bis 20, bevorzugt 1 bis 15 und insbesondere 1 bis 5 ist und der
Polymerrest ausgewählt ist aus einer Gruppe bestehend aus Alkydharzen, ölmodifizierten Alkydharzen, gesättigten oder ungesättigten Polyestern, natürlichen Ölen, Epoxiden, Polyamiden, Polycarbonaten, Polyethylenen, Polypropylenen, Polybutylenen, Polystyrolen, Ethylen-Propylen-Copolymeren, (Meth)acrylaten, (Meth)acrylamiden und deren Salzen, Phenolharzen, Polyoxymethylen-Homo- und -Copolymeren, Polyurethanen, Polysulfonen, Polysulfidkautschuken, Nitrocellulosen, Vinylbutyraten, Vinylpolymeren, Ethylcellulosen, Celluloseacetaten und/oder -butyraten, Reyon, Schellack, Wachsen, Ethylencopolymeren, organischen Kautschuken, Polysiloxanen, Polyethersiloxanen, Siliconharzen, Polyethern, Polyetherestern und/oder Polyethercarbonaten,
verwendet werden.

5. Härtbare Masse nach zumindest einem der Ansprüche 1 bis 4 enthaltend ein oder mehrere, gegebenenfalls chemisch und/oder physikalisch gebildete Treibmittel.

6. Verwendung von härtbaren Massen nach zumindest einem der Ansprüche 1 bis 5 zur Herstellung von oder als härtbare Zusammensetzungen, Klebstoffe, Dichtstoffe, Dichtungsmassen, Bindemittel, Oberflächenbeschichtungsmittel, reaktive Vernetzer, Haftvermittler, Hydrophobierungsmittel, Netzmittel, Primer und /oder Oberflächenmodifizierungsmittel, Bautenhydrophobierungsmittel, Additive in Lack- oder Nagellackformulierungen.

7. Verwendung von härtbaren Massen nach Anspruch 6 auf oder für verschiedene makroskopische oder mikroskopische Substrate ausgewählt aus der Gruppe der Metalle und Metalloxide, Glas und Glasfasern/Glasgewebe, Holz, Holzwerkstoffen, Naturfasern, sowie beispielsweise auch Kork und generell silikatischen Materialien, Beton, Mörtel, Gips, Mauerwerk, und Partikel, oxidische Partikel, pyrogene Kieselsäure, Fällungskieselsäuren, Quarzpartikel und weitere anorganische Oxidpartikel, Glaspartikel, Titandioxid, Aluminiumoxid, Zirkondioxid, Cerdioxid, Eisenoxide, Kupferoxide, Kaolin, Wollastonit, Talkum, Glimmer, Feldspäten, Hydroxide, Aluminiumtrihydroxid, Magnesiumdihydroxid, Böhmit, Hydrotalcit und hydroxydische Eisenpigmente, FeO(OH), Carbonate, Calciumcarbonat und Dolomit, Eisen, Kupfer, Zink, Nickel, Aluminium, Magnesium, Metalllegierungen und kohlenstoffhaltige Materialien, Graphit und Ruß, organische partikuläre Substrate, Siliconharze, organomodifizierte Silicone, organische Polymere und Biopolymere, Leder, Tissue, Papier und deren Gemische.

8. Verwendung nach Anspruch 6 oder 7 in Form von Lösungen oder Emulsionen oder Suspensionen oder Schäumen.

9. Verwendung der härtbaren Massen nach zumindest einem der Ansprüche 1 bis 5 als Bestandteil von Reaktivverdünnern, Emulsionen, Netzmitteln, Lacken, Haftvermittlern, Bindemitteln, Weichmachern, Thixotropiermitteln, Fungiziden, Flammschutzmitteln, Pigmenten, Füllstoffen, funktionalen Additiven in Kunststoffen, polymeren Schäumen, organischen Harzen oder Silikonharzen, Melt-Flow-Index-Verbesserern, Textil- oder Faser-Gleitadditiven, Schmiermitteln, Mattierungsmitteln, Ad- oder Absorbentien, selbstdispergierbaren Partikeln partikulären Emulgatoren, Entschäumern, Bindemitteln für keramischen Massen, Bautenschutzmitteln, Verkapselungsmitteln, Versiegelungen, antistatischen Additiven, Rieselhilfsmitteln, mikrobiziden Additiven, Fluoreszenzmarkern, Effektpigmenten, Mattierungsmitteln, Trennmitteln, tieftemperaturbeständigen Kabelbeschichtungen, leitfähigen Beschichtungen, Leiterbahnen, antistatischen Beschichtungen, elektronischen und/oder elektrischen Bauteilen, Gummiteilen und Membranen, Schlichten in der Textil- und Glasfaserindustrie, Papier, Additiven für Toner, Abrasiva oder Faltenkaschierungsmittel in Kosmetika, Formulierungsmitteln oder Trägermaterialien, Farb- und Konservierungsstoffen, Beschichtungen, Korrosionsschutzmitteln, Farben und/oder Lacken, tribologischen und/oder haptischen Beschichtungen.

10. Verfahren zum Verbinden von Oberflächen, bei dem eine härtbare Masse nach zumindest einem der Ansprüche 1 bis 5 bereitgestellt wird, die auf zumindest einer der zu verbindenden Oberflächen oder zwischen den zu verbindenden Oberflächen aufgebracht wird und anschließend unter Aushärten verklebt werden.

11. Verfahren zum Dichten oder Überbrücken oder Verfüllen von Oberflächen, Rissen oder Spalten, bei dem eine härtbare Masse nach zumindest einem der Ansprüche 1 bis 5 bereitgestellt wird, die zwischen die zu dichtenden Oberflächen aufgebracht wird und anschließend unter Gewährleistung der Dichtigkeit aushärtet.

12. Verfahren nach Anspruch 10 oder 11, **dadurch gekennzeichnet, dass** die härtbare Masse in Form eines Schaums appliziert wird.

13. Verfahren zur Oberflächenmodifizierung von Partikeln oder Flächengebilden, **dadurch gekennzeichnet, dass** die härtbaren Massen nach zumindest einem der Ansprüche 1 bis 5 unter Vermischung und in Gegenwart geeigneter Vernetzungskatalysatoren rein oder aus geeigneten organischen und/oder anorganischen Lösemitteln auf die Partikeloberflächen oder Flächengebilde oder aus Emulsionen aufgebracht werden, wo sie dann unter kovalenter oder physikalischer Anbindung ausreagieren.

14. Verfahren nach Anspruch 13, **dadurch gekennzeichnet, dass** als zu modifizierende Oberflächen anorganische und/oder organische Partikel oder Flächengebilde und/oder organomodifizierte Partikel oder Flächengebilde und/oder deren Mischungen miteinander verwendet werden.

15. Verwendung von Emulsionen und/oder Suspensionen nach Anspruch 8, **dadurch gekennzeichnet, dass** die Emulsionen und/oder Suspensionen Verbindungen ausgewählt aus den Gruppen der Katalysatoren, photolatente Basen, Additive zur Modifizierung der rheologischen Eigenschaften, hydrophile Füllstoffe, organofunktionelle und teillösliche und wasserunlösliche Silane und Siloxane, Hilfsstoffe, filmbildende Stoffe, antimikrobielle und konservierende Stoffe, Dispergiermittel, Entschäumer und Entlüfter, Farbstoffe, Färbemittel und Pigmente, Frostschutzmittel Fungizide, Haftvermittler und Reaktivverdünner, Weichmacher und Komplexbildner, Sprühhilfsmittel, Netzmittel, Vitamine, Wuchsstoffe, Hormone und Duftstoffe, Lichtschutzmittel, Radikalfänger, UV-Absorber und/oder Stabilisatoren enthalten.

16. Verwendung der härtbaren Massen nach zumindest einem der Ansprüche 1 bis 5 und/oder der Emulsionen und/oder Suspensionen nach Anspruch 15 als Rohstoffe für Lacke, Tinten, Trennmittel, Klebstoffe, kosmetische Produkte, kratzfeste Beschichtungen, Bautenschutzmittel, Korrosionsschutzmittel und/oder Dichtungsmassen, zur Beschichtung von Papier, Partikeln, Textil- und Glasfasern, zur Beschichtung von Füllstoffen für Papier, zur Erzeugung von Antistatikoberflächen und/oder als Ausgangsmaterial für die Herstellung von Gummiteilen auf der Basis von Polypropylenoxid.
